# EUROPEAN PATENT APPLICATION

(11) **EP 4 845 148 A1**
(43) Date of publication of application: **25.11.2026**
(21) Application number: 25884464.6
(22) Date of filing: 17.09.2025
(51) Int. Cl.: H04N 19/136, H04N 19/124

(54) **IMAGE ENCODING METHOD AND APPARATUS, IMAGE DECODING METHOD AND APPARATUS, DEVICE, STORAGE MEDIUM, AND PROGRAM PRODUCT**

(30) Priority: 30.10.2024 CN 202411537400
(71) Applicant: Tencent Technology (Shenzhen) Company Limited, Shenzhen, Guangdong 518057 (CN)
(72) Inventor: CHANG, Qing, Shenzhen, Guangdong 518057 (CN); CAO, Ruichen, Shenzhen, Guangdong 518057 (CN); RAN, Lei, Shenzhen, Guangdong 518057 (CN); HAN, Cunai, Shenzhen, Guangdong 518057 (CN); WANG, Yu, Shenzhen, Guangdong 518057 (CN); HAO, Zhengliang, Shenzhen, Guangdong 518057 (CN)
(74) Representative: Nederlandsch Octrooibureau
(86) International application number: PCT/CN2025/121965
(87) International publication number: WO 2026/091948

(57) **Abstract**

This application provides an image encoding method and apparatus, an image decoding method and apparatus, a device, a storage medium, and a program product. The method includes: obtaining a to-be-encoded image; performing at least one image detection mode on the image based on priorities of a plurality of image detection modes to obtain a detection result of the image; separately setting a quantization parameter for at least one macroblock in the image based on the detection result; encoding each macroblock based on a quantization parameter of each macroblock; and generating image encoded data of the image based on macroblock encoded data obtained through encoding.

## Description

### RELATED APPLICATION

This application claims priority to Chinese Patent Application No. 2024115374006 filed on October 30, 2024, which is incorporated herein by reference in its entirety.

### FIELD OF THE TECHNOLOGY

This application relates to the field of computer images, and in particular, to an image encoding method and apparatus, an image decoding method and apparatus, a device, a storage medium, and a program product.

### BACKGROUND OF THE DISCLOSURE

With a continuous increase in streaming media services, users have increasingly high requirements on video definition. However, to maintain definition of a live image at a high resolution, a very high encoding bitrate is needed to match the high resolution for encoding. If bandwidth is insufficient, frame freezing is quite likely to occur during watching, and huge pressure is also imposed on bandwidth costs of a streaming media service platform.

In the related art, a higher-level encoding standard is used for substitution, for example, an H.264 encoding standard is upgraded to an H.265 or H.266 encoding standard, to cope with the foregoing problem. However, a higher-level encoding standard has poorer compatibility with hardware, increasing difficulty in promotion and also leading to higher consumption of computational power. It is difficult to achieve same image encoding effect at a low encoding bitrate.

### SUMMARY

Embodiments of this application provide an image encoding method and apparatus, an image decoding method and apparatus, a device, a storage medium, and a program product, to implement finer-grained encoding control.

Technical solutions in the embodiments of this application are implemented as follows:
The embodiments of this application provide an image encoding method, applied to an electronic device. The method includes:
obtaining a to-be-encoded image;
performing at least one image detection mode on the image based on priorities of a plurality of image detection modes to obtain a detection result of the image;
separately setting a quantization parameter (QP) for at least one macroblock in the image based on the detection result;
encoding each macroblock based on a QP of each macroblock; and
generating image encoded data of the image based on macroblock encoded data obtained through encoding.

The embodiments of this application provide an image decoding method, applied to an electronic device. The method includes:
receiving image encoded data, the image encoded data being obtained through the image encoding method provided in the embodiments of this application;
decoding each piece of macroblock encoded data based on a QP of each macroblock to obtain macroblock decoded data of each macroblock; and
combining macroblock decoded data of all macroblocks into a decoded image.

The embodiments of this application provide an image encoding method, applied to an electronic device. The method includes:
obtaining a to-be-encoded image;
determining, based on proportions of pixels of a plurality of color ranges in the image, a target color range corresponding to a target region of a target object;
using a proportion of pixels in each macroblock of the image that belong to the target color range as a probability that each macroblock includes the target region of the target object;
separately setting a QP for at least one macroblock based on the probability that each macroblock includes the target region;
encoding each macroblock based on a QP of each macroblock; and
generating image encoded data of the image based on macroblock encoded data obtained through encoding.

The embodiments of this application provide an image decoding method, applied to an electronic device. The method includes:
receiving image encoded data, the image encoded data being obtained through the image encoding method provided in the embodiments of this application;
decoding each piece of macroblock encoded data based on a QP of each macroblock to obtain macroblock decoded data of each macroblock; and
combining macroblock decoded data of all macroblocks into a decoded image.

The embodiments of this application provide an image encoding apparatus, including:
a data obtaining module, configured to obtain a to-be-encoded image; and
an encoding module, configured to perform at least one image detection mode on the image based on priorities of a plurality of image detection modes to obtain a detection result of the image,
the encoding module being further configured to separately set a QP for at least one macroblock in the image based on the detection result;
the encoding module being further configured to encode each macroblock based on a QP of each macroblock; and
the encoding module being further configured to generate image encoded data of the image based on macroblock encoded data obtained through encoding.

The embodiments of this application provide an image decoding apparatus, including:
a data obtaining module, configured to receive image encoded data, the image encoded data being obtained through the image encoding method provided in the embodiments of this application; and
a decoding module, configured to decode each piece of macroblock encoded data based on a QP of each macroblock to obtain macroblock decoded data of each macroblock,
the decoding module being further configured to combine macroblock decoded data of all macroblocks into a decoded image.

The embodiments of this application provide an image encoding apparatus, including:
a data obtaining module, configured to obtain a to-be-encoded image; and
an encoding module, configured to determine, based on proportions of pixels of a plurality of color ranges in the image, a target color range corresponding to a target region of a target object,
the encoding module being further configured to use a proportion of pixels in each macroblock of the image that belong to the target color range as a probability that each macroblock includes the target region of the target object;
the encoding module being further configured to separately set a QP for at least one macroblock based on the probability that each macroblock includes the target region;
the encoding module being further configured to encode each macroblock based on a QP of each macroblock; and
the encoding module being further configured to generate image encoded data of the image based on macroblock encoded data obtained through encoding.

The embodiments of this application provide an image decoding apparatus, including:
a data obtaining module, configured to receive image encoded data, the image encoded data being obtained through the image encoding method provided in the embodiments of this application; and
a decoding module, configured to decode each piece of macroblock encoded data based on a QP of each macroblock to obtain macroblock decoded data of each macroblock,
the decoding module being further configured to combine macroblock decoded data of all macroblocks into a decoded image.

The embodiments of this application provide an electronic device. The electronic device includes:
a memory, configured to store computer-executable instructions or a computer program; and
a processor, configured to: when executing the computer-executable instructions or the computer program stored in the memory, implement the image encoding method provided in the embodiments of this application, or implement the image decoding method provided in the embodiments of this application.

The embodiments of this application provide a computer-readable storage medium, having a computer program or computer-executable instructions stored therein, to implement, when executed by a processor, the image encoding method provided in the embodiments of this application, or implement the image decoding method provided in the embodiments of this application.

The embodiments of this application provide a computer program product, including a computer program or computer-executable instructions, the computer program or the computer-executable instructions, when executed by a processor, implement the image encoding method provided in the embodiments of this application, or implement the image decoding method provided in the embodiments of this application.

The embodiments of this application provide a video bitstream storage method, configured for performing the image encoding method provided in the embodiments of this application to generate a video bitstream; and storing the video bitstream.

The embodiments of this application provide a video bitstream transmission method, configured for performing the image encoding method provided in the embodiments of this application to generate a video bitstream; and transmitting the video bitstream.

The embodiments of this application provide a computer-readable storage medium, having a computer program/instructions and a video bitstream stored therein, the computer program/instructions, when executed by a processor, implementing the operations of the image encoding method provided in the embodiments of this application to generate the video bitstream.

The embodiments of this application have the following beneficial effects:

Detection is performed on an image based on priorities of a plurality of image detection modes, and a more appropriate QP is set for a macroblock in the image based on a detection result of at least one image detection mode. In comparison with a computing solution in the related art in which a single QP is used, more diverse image detection modes are used, and performing detection based on priorities can ensure that a more appropriate QP is set for each macroblock preferentially based on a detection result of a more appropriate detection mode, to implement finer-grained encoding control and obtain a higher-quality image at a limited bitrate.

### BRIEF DESCRIPTION OF THE DRAWINGS

FIG. 1 is a diagram of a structure of an image encoding/decoding system architecture according to an embodiment of this application.
FIG. 2A is a first diagram of a structure of an image encoding device according to an embodiment of this application.
FIG. 2B is a second diagram of a structure of an image encoding device according to an embodiment of this application.
FIG. 2C is a first diagram of a structure of an image decoding device according to an embodiment of this application.
FIG. 2D is a second diagram of a structure of an image decoding device according to an embodiment of this application.
FIG. 3A is a first schematic flowchart of an image encoding method according to an embodiment of this application.
FIG. 3B is a second schematic flowchart of an image encoding method according to an embodiment of this application.
FIG. 3C is a third schematic flowchart of an image encoding method according to an embodiment of this application.
FIG. 3D is a fourth schematic flowchart of an image encoding method according to an embodiment of this application.
FIG. 3E is a fifth schematic flowchart of an image encoding method according to an embodiment of this application.
FIG. 3F is a sixth schematic flowchart of an image encoding method according to an embodiment of this application.
FIG. 3G is a seventh schematic flowchart of an image encoding method according to an embodiment of this application.
FIG. 3H is an eighth schematic flowchart of an image encoding method according to an embodiment of this application.
FIG. 3I is a ninth schematic flowchart of an image encoding method according to an embodiment of this application.
FIG. 3J is a tenth schematic flowchart of an image encoding method according to an embodiment of this application.
FIG. 3K is an eleventh schematic flowchart of an image encoding method according to an embodiment of this application.
FIG. 3L is a twelfth schematic flowchart of an image encoding method according to an embodiment of this application.
FIG. 3M is a schematic flowchart of a detection mode according to an embodiment of this application.
FIG. 3N is a diagram of a principle of a detection mode according to an embodiment of this application.
FIG. 3O is a schematic flowchart of determining a target color range according to an embodiment of this application.
FIG. 4A is a thirteenth schematic flowchart of an image encoding method according to an embodiment of this application.
FIG. 4B is a fourteenth schematic flowchart of an image encoding method according to an embodiment of this application.
FIG. 4C is a fifteenth schematic flowchart of an image encoding method according to an embodiment of this application.
FIG. 4D is a sixteenth schematic flowchart of an image encoding method according to an embodiment of this application.
FIG. 5A is a first schematic flowchart of an image decoding method according to an embodiment of this application.
FIG. 5B is a second schematic flowchart of an image decoding method according to an embodiment of this application.
FIG. 5C is a third schematic flowchart of an image decoding method according to an embodiment of this application.
FIG. 6 is a fourth schematic flowchart of an image decoding method according to an embodiment of this application.
FIG. 7A is a diagram of macroblocks in an image according to an embodiment of this application.
FIG. 7B is a diagram of a first region according to an embodiment of this application.
FIG. 7C is a diagram of a second region according to an embodiment of this application.
FIG. 7D is a diagram of probability levels and flatness levels of an image according to an embodiment of this application.
FIG. 8 is a first schematic flowchart of application of an image encoding method and an image decoding method in a livestreaming scenario according to an embodiment of this application.
FIG. 9 is a second schematic flowchart of application of an image encoding method and an image decoding method in a livestreaming scenario according to an embodiment of this application.

The foregoing "first" and "second" are merely intended to distinguish between different solutions, and do not represent superiorities of the solutions or priorities during implementation.

### DESCRIPTION OF EMBODIMENTS

To make the objectives, technical solutions, and advantages of this application clearer, the following describes this application in further detail with reference to the accompanying drawings. The described embodiments are not to be considered as a limitation to this application. All other embodiments obtained by a person of ordinary skill in the art without creative efforts shall fall within the protection scope of this application.

In the following descriptions, the term "some embodiments" describes subsets of all possible embodiments, but "some embodiments" may be the same subset or different subsets of all the possible embodiments, and may be combined with each other without conflict.

In the following descriptions, the terms "first", "second", and "third" are merely intended to distinguish between similar objects rather than describe a specific order of objects. The "first", "second", and "third" are interchangeable in order in proper circumstances, so that embodiments of this application described herein can be implemented in an order other than the order illustrated or described herein.

In the embodiments of this application, the term "module" or "unit" is a computer program having a predetermined function or a part of a computer program, operates together with other related parts to achieve a predetermined objective, and may be all or partially implemented by software, hardware (for example, a processing circuit or a memory), or a combination thereof. Similarly, one processor (or a plurality of processors or memories) may be configured to implement one or more modules or units. In addition, each module or unit may be a part of an overall module or unit including a function of the module or unit.

Unless otherwise defined, all technical and scientific terms used in the embodiments of this application have the same meanings as those commonly understood by a person skilled in the art to which this application belongs. Terms used in the embodiments of this application are merely intended to describe the embodiments of this application, but not to limit this application.

During related data collection and processing in the embodiments of this application in exemplary application, informed consent or individual consent of a personal information subject needs to be obtained in strict accordance with requirements of related laws and regulations, and subsequent data use and processing are performed within an authorized scope of laws and regulations and the personal information subject.

Before the embodiments of this application are further described in detail, the terms in the embodiments of this application are described, and the following explanations are applicable to the terms in the embodiments of this application.
(1) A target region, also referred to as a region of interest (ROI), is a region that needs to be focused on in an image. The target region includes a first region and a second region. The first region is a core overall region of a target object (including a living creature or an object) in the image, is a most recognizable key part of the target object that can indicate a main form or an identity feature of the target object, and is a core component of the target region (ROI). For example, when the target object is a living creature, the first region is a face region of the living creature (for example, a human face); or when the target object is an object, the first region is a main region of the object (for example, a main body of an automobile, where non-core auxiliary parts such as a wheel may be excluded). The second region is a local feature region of the target object (including a living creature or an object) in the image, is a local component of the target object that is outside the first region and that has a specific function or detailed attribute, and is a supplementary component of the target region (ROI). For example, when the target object is a living creature, the second region is a skin region of the living creature; or when the target object is an object, the second region is a local region of the object (for example, an auxiliary part with a detailed feature, such as a lamp or a wheel hub of an automobile).

For example, the target region is an illumination-sensitive region that has a color difference under different illumination conditions. The following are some common illumination-sensitive regions:
Edge and contour: A change in illumination may significantly affect visibility of an edge and a contour of an object. For example, strong light may cause the edge to be blurry, and weak light may cause the contour to blend into a background.

Reflection and highlight: For an object with a reflective or highlighted part, such as metal, glass, or a water surface, an angle and intensity of illumination directly affect visual performance of these regions.

Shadow region: In the shadow region, an illumination condition determines a depth and a shape of a shadow, affecting three-dimensional perception and depth perception of an image.

Color and texture: Illumination affects perception of a color in an image and visibility and definition of a texture. For a region with a significant color change, for example, a photo of a flower or a scenery, illumination correction can make a color more realistic.

Backlight region: Under a backlight condition, some regions of an object may be excessively dark due to insufficient illumination, or may cause glare due to strong backlight. How to balance backlight and main illumination needs to be considered during processing of these regions.

Eye and facial features: During portrait photography, illumination is of great importance to eye details, facial expressions, and skin texture. Correct illumination may highlight these features, and improper illumination may cause facial shadows or loss of details.

(2) A QP is a key indicator for defining a quantization step size. The QP determines an interval at which continuous signal values are mapped to discrete levels, that is, quantization precision. A smaller QP value indicates a smaller quantization step size, finer-grained quantization, and higher image quality, but also indicates a higher bitrate. On the contrary, a larger QP value indicates a larger quantization step size, coarser-grained quantization, and lower image quality, but also indicates a lower bitrate and a higher compression ratio. Therefore, the QP is used during image encoding (or video encoding) to balance a compression ratio and image quality.

In different video encoding standards such as H.264/AVC and HEVC, QP setting is usually an important encoding decision process, and encoding efficiency and video quality need to be comprehensively considered, to achieve optimal encoding effect. In addition, the QP not only affects a compression ratio and quality of a video, but also is closely related to a bitrate control policy for video encoding. An objective of the bitrate control policy is to minimize a bitrate of a video and increase a compression ratio of the video while ensuring video quality. The QP is a key parameter in the bitrate control policy, and the QP controls a bitrate by adjusting a value of a quantization coefficient. In general, the QP performs a very important function in video encoding, and is a key parameter that needs to balance encoding efficiency and video quality. Properly setting the QP can implement efficient video encoding, and can reduce a bitrate of a video while ensuring video quality.

(3) A bitrate is a quantity of bits used in unit time (usually in seconds) during audio/video encoding, and indicates a data transmission or storage speed. A higher bitrate indicates that more information is included in unit time and higher audio/video quality is usually obtained, but also indicates that more storage space and higher transmission bandwidth are needed.

(4) A resolution is a size of an image in audio/video encoding, and is usually represented by using a pixel as a unit. The resolution includes a quantity of horizontal pixels and a quantity of vertical pixels. For example, 1920×1080 (1080p) indicates that an image has a width of 1080 pixels and a height of 1920 pixels. A higher resolution indicates more abundant details of an image, but also indicates that more computing resources are needed for processing.

(5) Super-resolution is an image post-processing technology for processing a low-resolution image to generate an image with a higher resolution and more abundant details, and may be implemented by using a deep learning-based algorithm (for example, an image super-resolution algorithm based on a convolutional neural network).

(6) Color enhancement is an image processing technology for adjusting a color of an image to make the color of the image brighter and have higher contrast, to improve visual effect of the image. The color enhancement technology may be applied to the fields of image inpainting, video processing, and the like.

(7) Adaptive quantization is a video encoding technology for automatically adjusting a QP based on content of a video sequence to achieve higher encoding efficiency. During adaptive quantization, different degrees of compression may be performed based on different regions (for example, a dynamic region and a static region) in a video, to reduce an encoding bitrate while ensuring video quality.

(8) A macroblock is a basic concept in video encoding or image encoding. To be specific, a to-be-encoded image is divided into several blocks with a same size (for example, 16×16 or 8×8), to perform image encoding by using the macroblock as a basic unit.

(9) An image detection mode is a mode of detecting, from an image, reference data for calculating a QP for a macroblock of the image. The image detection mode includes a first detection mode and a second detection mode. For example, a target object imaged in an image is a human being, the first detection mode may be facial recognition, and the second detection mode may be skin color detection.

(10) A color space is a manner for describing a color, and defines a color set and a color representation method. Different color spaces are applicable to different scenarios. The following are some common color spaces:
An RGB color space is an additive color model based on light of three colors: red, green, and blue, and is widely applied to displays, televisions, and photography. The RGB color space may be directly associated with a display device, and is suitable for image editing and display, but is not suitable for color printing.

A YUV/YCbCr color space separates luminance information (Y) and chrominance information (U and V, or Cb and Cr), and is usually used for video compression and transmission. The Y component in the YUV color space is responsible for luminance, and the U and V components are responsible for color information. The YUV color space is very common in analog and digital television broadcasting.

A CMYK color space is a color space used in the printing industry, is a subtractive color model based on four inks: cyan, magenta, yellow, and black, and allows a wide range of colors to be reproduced on paper.

An HSV/HSB color space is a color space based on human perception of colors, where H represents hue, S represents saturation, and V or B represents value or brightness, so that color selection and operations are more intuitive.

An sRGB color space is a standardized RGB color space intended to ensure color consistency under different devices and illumination conditions, and is widely applied to web pages and consumer electronic products.

As video livestreaming has become a streaming media service that Internet users use every day, users have increasingly high requirements on video definition. However, to maintain definition of a live image at a high resolution, a very high encoding bitrate is needed to match the high resolution for encoding. If bandwidth is insufficient, frame freezing is quite likely to occur during watching, and huge pressure is also imposed on bandwidth costs of a livestreaming platform.

In the related art, a higher-level encoding standard is used for substitution, for example, an H.264 encoding standard is upgraded to an H.265 or H.266 encoding standard, to cope with the foregoing problem. However, a higher-level encoding standard has poorer compatibility with hardware, increasing difficulty in promotion and also leading to higher consumption of computational power. It is difficult to achieve same image encoding effect at a low encoding bitrate.

The embodiments of this application provide an image encoding method and apparatus, an image decoding method and apparatus, a device, a computer-readable storage medium, and a computer program product, to implement finer-grained encoding control. The following describes exemplary application of an electronic device provided in the embodiments of this application. The electronic device provided in the embodiments of this application may be implemented as various types of terminal devices such as a notebook computer, a tablet computer, a desktop computer, a set-top box, a smartphone, a smart speaker, a smartwatch, a smart television, and an in-vehicle terminal, or may be implemented as a server. The following describes exemplary application in a case that the device is implemented as a terminal.

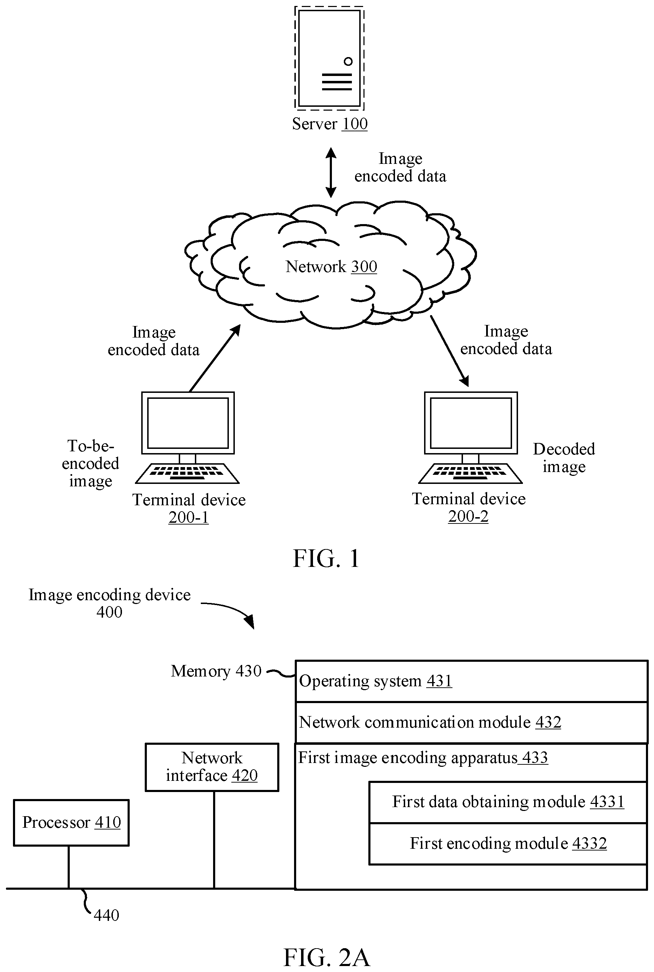

FIG. 1 is a diagram of a structure of an image encoding/decoding system architecture according to an embodiment of this application. FIG. 1 includes a server 100, a terminal device 200-1, a terminal device 200-2, and a network 300. The terminal device 200-1 and the terminal device 200-2 are connected to the server 100 through the network 300. The network 300 may be a wide area network, a local area network, or a combination thereof.

In some embodiments, the embodiments of this application may be cooperatively implemented by a server and a terminal device. For example, after encoding a local to-be-encoded image by using the image encoding method provided in the embodiments of this application to obtain image encoded data, the terminal device 200-1 transmits the image encoded data to the server 100; the server 100 receives the image encoded data and then transmits the image encoded data to the terminal device 200-2; and after receiving the image encoded data, the terminal device 200-2 decodes the image encoded data by using the image decoding method provided in the embodiments of this application to obtain a decoded image. Herein, in an instant messaging scenario, the server 100 may be a background server of an instant messaging client; and in a livestreaming scenario, the server 100 may be a background server of a livestreaming platform.

In some other embodiments, the embodiments of this application may be cooperatively implemented by a server and a terminal device. For example, the terminal device 200-1 transmits a locally collected to-be-encoded image to the server 100 by using the image encoding method provided in the embodiments of this application; after receiving the to-be-encoded image (for example, one of a plurality of photos in a continuous capture mode that are saved in an electronic album, or one frame in a video), the server 100 encodes the to-be-encoded image by using the image encoding method provided in the embodiments of this application to obtain image encoded data, and transmits the image encoded data to the terminal device 200-2; and after receiving the image encoded data, the terminal device 200-2 decodes the image encoded data by using the image decoding method provided in the embodiments of this application to obtain a decoded image. Herein, in an instant messaging scenario, the server 100 may be a background server of an instant messaging client; and in a livestreaming scenario, the server 100 may be a background server of a livestreaming platform.

In some other embodiments, the embodiments of this application may be independently implemented by a terminal device. For example, the terminal device 200-1 runs an electronic album application, captures a photo (corresponding to a to-be-encoded image), and then encodes the photo by using the image encoding method provided in the embodiments of this application to obtain image encoded data of the photo, to reduce space occupied by the image in a memory and a magnetic disk. When a user opens an electronic album, the image encoded data of the photo is decoded by using the image decoding method provided in the embodiments of this application to obtain the photo, and the photo is displayed on the terminal device 200-1.

In some other embodiments, the embodiments of this application may be independently implemented by a terminal device. For example, when shooting a video, the terminal device 200-1 encodes each video frame (corresponding to a to-be-encoded image) in the video in real time based on the image encoding method provided in the embodiments of this application to obtain image encoded data of each video frame, to reduce space occupied by the video in a memory and a magnetic disk. When a user taps to play the video, the image encoded data of each video frame is decoded by using the image decoding method provided in the embodiments of this application to obtain a decoded video, and the decoded video is played on the terminal device 200-1.

For example, an image encoding device is configured to encode an image. FIG. 2A is a first diagram of a structure of an image encoding device according to an embodiment of this application. The image encoding device may be implemented as the foregoing terminal device or server. The image encoding device 400 shown in FIG. 2A includes at least one processor 410, a memory 430, and at least one network interface 420. The components in the image encoding device 400 are coupled together through a bus system 440. The bus system 440 is configured to implement connection and communication between the components. In addition to a data bus, the bus system 440 further includes a power bus, a control bus, and a state signal bus. However, for clarity of description, various buses are marked as the bus system 440 in FIG. 2A.

The processor 410 may be an integrated circuit chip with a signal processing capability, for example, a general-purpose processor, a digital signal processor (DSP), another programmable logic device, a discrete gate or transistor logic device, or a discrete hardware component. The general-purpose processor may be a microprocessor, any conventional processor, or the like.

The memory 430 may be a removable memory, a non-removable memory, or a combination thereof. For example, a hardware device includes a solid-state memory, a hard disk drive, or an optical drive. In some embodiments, the memory 430 includes one or more storage devices physically located away from the processor 410.

The memory 430 includes a volatile memory or a nonvolatile memory, or may include both a volatile memory and a nonvolatile memory. The nonvolatile memory may be a read-only memory (ROM). The volatile memory may be a random access memory (RAM). The memory 430 described in this embodiment of this application is intended to include any suitable type of memory.

In some embodiments, the memory 430 can store data to support various operations. Examples of the data include a program, a module, and a data structure or a subset or superset thereof. Examples are described below:

An operating system 431 includes system programs for processing various basic system services and performing hardware-related tasks, for example, a framework layer, a core library layer, and a driver layer for implementing various basic services and process hardware-based tasks.

A network communication module 432 is configured to reach another electronic device through one or more (wired or wireless) network interfaces 420. For example, the network interface 120 includes Bluetooth, wireless fidelity (Wi-Fi), and universal serial bus (USB).

In some embodiments, the apparatus provided in the embodiments of this application may be implemented by using software. FIG. 2A shows a first image encoding apparatus 433 stored in the memory 430. The first image encoding apparatus 433 may be software in a form of a program, a plug-in, or the like, and includes the following software modules: a first data obtaining module 4331 and a first encoding module 4332. These modules are logical modules, and therefore may be flexibly combined or further split based on implemented functions. Functions of the modules are described below.

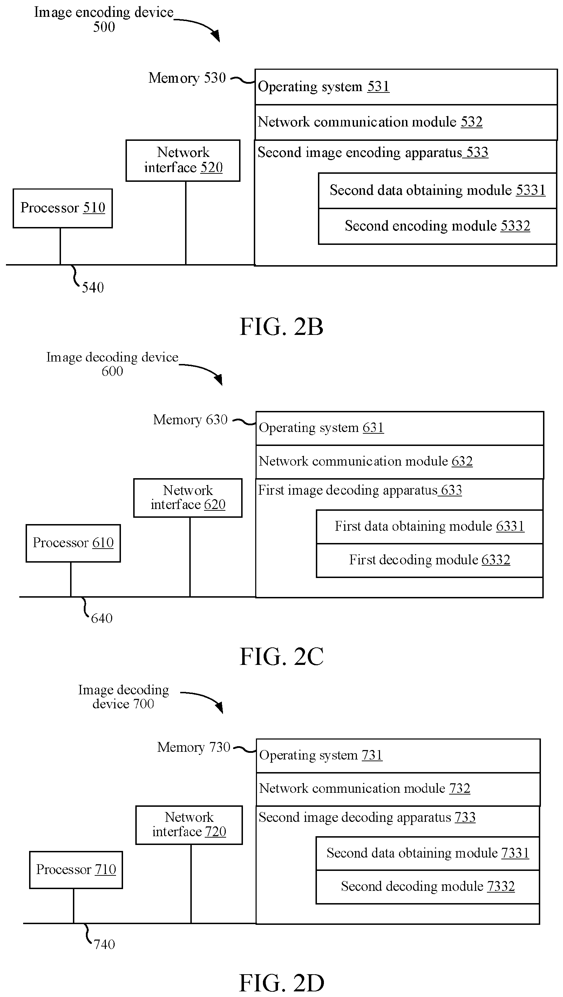

For example, an image encoding device is configured to encode an image. FIG. 2B is a second diagram of a structure of an image encoding device according to an embodiment of this application. The image encoding device may be implemented as the foregoing terminal device or server. The image encoding device 500 shown in FIG. 2B includes at least one processor 510, a memory 530, and at least one network interface 520. The components in the image encoding device 500 are coupled together through a bus system 540. The bus system 540 is configured to implement connection and communication between the components. In addition to a data bus, the bus system 540 further includes a power bus, a control bus, and a state signal bus. However, for clarity of description, various buses are marked as the bus system 540 in FIG. 2B. For specific descriptions of the processor 510 and the memory 530, refer to the foregoing descriptions. Details are not described herein again.

In some embodiments, the apparatus provided in the embodiments of this application may be implemented by using software. FIG. 2B shows a second image encoding apparatus 533 stored in the memory 530. The second image encoding apparatus 533 may be software in a form of a program, a plug-in, or the like, and includes the following software modules: a second data obtaining module 5331 and a second encoding module 5332. These modules are logical modules, and therefore may be flexibly combined or further split based on implemented functions. Functions of the modules are described below.

For example, an image decoding device is configured to decode an image. FIG. 2C is a first diagram of a structure of an image decoding device according to an embodiment of this application. The image decoding device may be implemented as the foregoing terminal device or server. The image decoding device 600 shown in FIG. 2C includes at least one processor 610, a memory 630, and at least one network interface 620. The components in the image decoding device 600 are coupled together through a bus system 640. The bus system 640 is configured to implement connection and communication between the components. In addition to a data bus, the bus system 640 further includes a power bus, a control bus, and a state signal bus. However, for clarity of description, all types of buses in FIG. 2C are marked as the bus system 640. For specific descriptions of the processor 610 and the memory 630, refer to the foregoing descriptions. Details are not described herein again.

In some embodiments, the apparatus provided in the embodiments of this application may be implemented by using software. FIG. 2C shows a first image decoding apparatus 633 stored in the memory 630. The first image decoding apparatus 633 may be software in a form of a program, a plug-in, or the like, and includes the following software modules: a first data obtaining module 6331 and a first decoding module 6332. These modules are logical modules, and therefore may be flexibly combined or further split based on implemented functions. Functions of the modules are described below.

For example, an image decoding device is configured to decode an image. FIG. 2D is a second diagram of a structure of an image decoding device according to an embodiment of this application. The image decoding device may be implemented as the foregoing terminal device or server. The image decoding device 700 shown in FIG. 2D includes at least one processor 710, a memory 730, and at least one network interface 720. The components in the image decoding device 700 are coupled together through a bus system 740. The bus system 740 is configured to implement connection and communication between the components. In addition to a data bus, the bus system 740 further includes a power bus, a control bus, and a state signal bus. However, for clarity of description, all types of buses in FIG. 2D are marked as the bus system 740. For specific descriptions of the processor 710 and the memory 730, refer to the foregoing descriptions. Details are not described herein again.

In some embodiments, the apparatus provided in the embodiments of this application may be implemented by using software. FIG. 2D shows a second image decoding apparatus 733 stored in the memory 730. The second image decoding apparatus 733 may be software in a form of a program, a plug-in, or the like, and includes the following software modules: a second data obtaining module 7331 and a second decoding module 7332. These modules are logical modules, and therefore may be flexibly combined or further split based on implemented functions. Functions of the modules are described below.

In some embodiments, the terminal device or the server may run various computer-executable instructions or computer programs to implement the image encoding method or the image decoding method provided in the embodiments of this application. The terminal device is used as an example. The computer-executable instruction may be a microprogram-level command, a machine instruction, or a software instruction. The computer program may be a native program or software module in an operating system; may be a native application (APP), to be specific, a program that needs to be installed in an operating system to run, for example, a livestreaming APP or an instant messaging APP; or may be a mini program that can be embedded into any APP, to be specific, a program that only needs to be downloaded to a browser environment to run. To sum up, the computer-executable instruction may be an instruction in any form, and the computer program may be an application, a module, or a plug-in in any form.

In some other embodiments, the apparatus provided in the embodiments of this application may be implemented by using hardware. In an example, the apparatus provided in the embodiments of this application may be a processor in a form of a hardware decoding processor, and is programmed to perform the image encoding method or the image decoding method provided in the embodiments of this application. For example, the processor in the form of the hardware decoding processor may be one or more application-specific integrated circuits (ASICs), DSPs, programmable logic devices (PLDs), complex programmable logic devices (CPLDs), field programmable gate arrays (FPGAs), or other electronic elements.

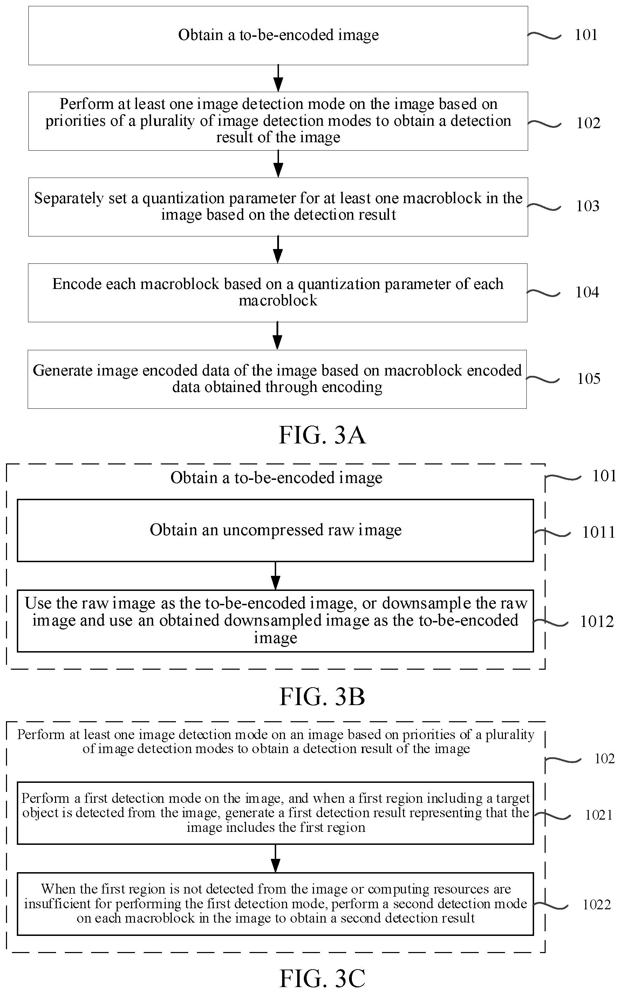

The image encoding method provided in the embodiments of this application is described by using an example in which the image encoding device (the terminal device or the server) is configured to encode an image. FIG. 3A is a first schematic flowchart of an image encoding method according to an embodiment of this application. The method is described with reference to operations shown in FIG. 3A.

Operation 101: Obtain a to-be-encoded image.

In some embodiments, the to-be-encoded image may be an encoded image, for example, an image obtained by decoding an encoded video. For example, a video file in an MPEG format is decoded, and an image obtained through decoding is used as the to-be-encoded image.

In some embodiments, the to-be-encoded image may be an uncompressed raw image. As shown in FIG. 3B, operation 101 shown in FIG. 3A may be implemented by the following operation 1011 to operation 1012. Details are described below.

Operation 1011: Obtain an uncompressed raw image.

In some embodiments, the uncompressed raw image may be a frame of image in a raw video. The raw video is video data that has not been processed by any compression algorithm, and is also referred to as an uncompressed video. The uncompressed raw video image may be directly captured by an image sensor, or a frame of image in a local raw video may be read by video processing software or a programming library (for example, FFmpeg or OpenCV) as a raw image. The uncompressed image may alternatively be an uncompressed photo in an electronic album. For example, one of a plurality of photos captured in a continuous capture mode is used as a raw image. A specific manner of obtaining the uncompressed raw image is not limited in this embodiment of this application.

Operation 1012: Use the raw image as the to-be-encoded image, or downsample the raw image and use an obtained downsampled image as the to-be-encoded image.

In some embodiments, the raw image may be directly used as the to-be-encoded image, or a raw image that has undergone downsampling (for example, through a nearest interpolation method, a bilinear interpolation method, or a bicubic interpolation method) may be used as the to-be-encoded image. For example, a resolution of a raw image is 1920×1080 (1080p), and a resolution of the downsampled image obtained through downsampling is 1280×720. A specific implementation of the downsampling is not limited in this embodiment of this application.

According to this embodiment of this application, the downsampling reduces the resolution of the raw image, with only slight loss of definition of the image, to reduce computing consumption of image encoding and reduce storage space of image encoded data under a same image encoding standard.

Still refer to FIG. 3A. Operation 102: Perform at least one image detection mode on the image based on priorities of a plurality of image detection modes to obtain a detection result of the image.

In some embodiments, the priorities are preset. The at least one image detection mode is performed on the image in descending order of the priorities of the plurality of image detection modes to obtain the detection result of the image. For example, based on the preset priorities, a first detection mode with a first priority is first performed, and then a second detection mode with a second priority is performed. When a corresponding detection result is obtained by performing a detection mode with a high priority (the first priority), a detection mode with a low priority (the second priority) is no longer performed. When no corresponding detection result is obtained by performing a detection mode with a high priority (or the detection mode with the high priority cannot be performed due to insufficient computing resources), a detection mode with a low priority is further performed until a detection result of a corresponding priority is obtained.

The priorities of the plurality of image detection modes are preset, and detection is performed in descending order of the priorities (detection is stopped when a corresponding detection result is obtained in high-priority detection, and low-priority detection is further performed when no result is obtained or resources are insufficient). This can preferentially leverage advantages (such as accuracy and efficiency) of a high-priority detection mode while ensuring effectiveness of image detection, to reduce unnecessary execution of the low-priority detection, optimize a detection process, save computing resources, and improve overall image detection efficiency and practicability.

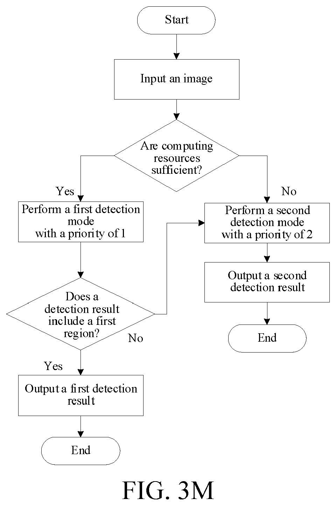

FIG. 3M is a schematic flowchart of a detection mode according to an embodiment of this application. After an image is inputted, whether computing resources are sufficient is first determined. For example, whether central processing unit (CPU) usage remains at a high level (for example, is higher than preset usage) for a long time is detected. For example, if the CPU usage approaches or reaches 100%, CPU resources are insufficient. When the computing resources are sufficient, the first detection mode with a priority of 1 (a high priority) is performed. When the computing resources are insufficient, the second detection mode with a priority of 2 is performed, and a second detection result is outputted. After the first detection mode is performed, when a detection result includes a first region (corresponding to a case that a high-priority detection mode is performed and a corresponding detection result is obtained), a first detection result is outputted. After the first detection mode is performed, when a detection result does not include the first region (corresponding to a case that a high-priority detection mode is performed and no corresponding detection result is obtained), the second detection mode with a priority of 2 is performed, and the second detection result is outputted.

In some embodiments, the first region may be a visual focus region in the image. A livestreaming scenario is used as an example. The first region may be a face region of a streamer.

In some embodiments, the plurality of image detection modes include at least two detection modes, for example, including the first detection mode and the second detection mode. A priority of the first detection mode is higher than a priority of the second detection mode. The first detection mode (for example, object detection) is performed on the image. After a first detection result representing that the image includes the first region is generated, the second detection mode is no longer performed on the image.

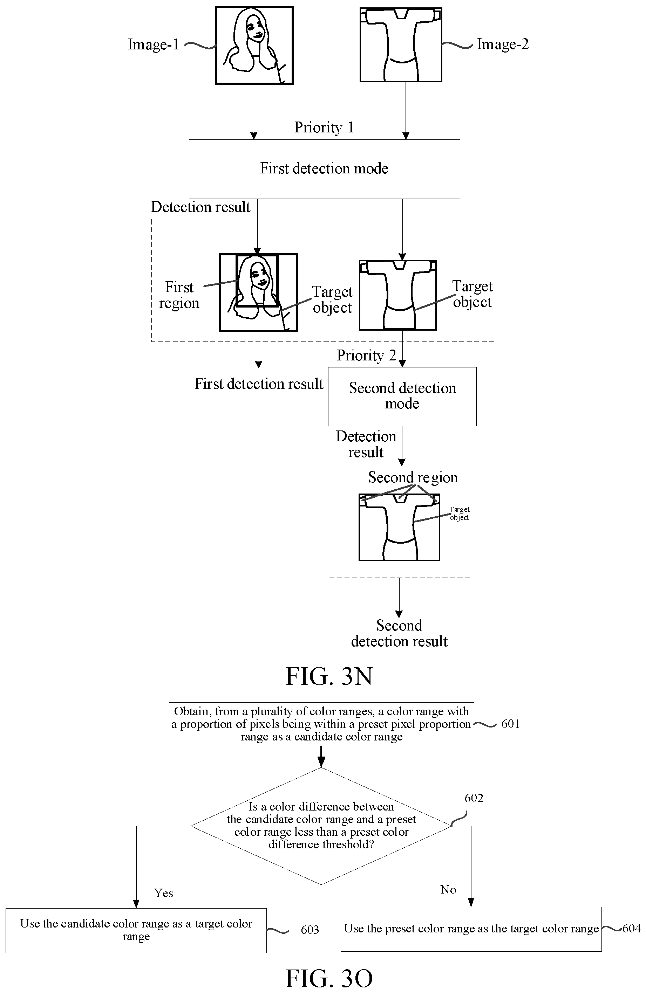

For example, a target object imaged in the image is a human being. FIG. 3N is a diagram of a principle of a detection mode according to an embodiment of this application. The target object may be a streamer in a livestreaming room. The first detection mode may be facial recognition. Correspondingly, the first region is a face region. The second detection mode may be skin color detection, and is configured for detecting a second region (a region different from the first region) of the streamer. In some embodiments, the second region is an ROI in the image other than the first region. A livestreaming scenario is used as an example. The second region may be a skin region, for example, a bare skin region, of a streamer. As shown in FIG. 3N, for an inputted image-1, the first detection mode corresponding to the priority 1 is performed based on the preset priorities, and a detection result represents that the image-1 includes the first region. In this case, a first detection result representing that the image-1 includes the first region is generated, and the second detection mode is no longer performed on the image-1. For an inputted image-2, the first detection mode corresponding to the priority 1 is performed based on the preset priorities, and a detection result represents that the image-2 does not include the first region. In this case, the second detection mode corresponding to the priority 2 is performed based on the preset priorities, and probabilities that each macroblock includes the second region are combined into a second detection result. Herein, the second detection mode may alternatively be a detection mode obtained by combining skin color detection and flatness detection, and is configured for detecting a skin region of the streamer and flatness of each macroblock in the image. A probability that each macroblock includes the second region and the flatness of the macroblock are combined into a second detection result (refer to descriptions of operation 10226 to operation 10228 below).

For example, the target object imaged in the image is an object. The target object may be a product in an advertisement video. The first detection mode may be target recognition, for example, a target recognition method like You Only Look Once (YOLO). The second detection mode may be color value detection, and is configured for performing detection on a local region of the product.

As shown in FIG. 3C, operation 102 shown in FIG. 3A may be implemented by the following operation 1021 to operation 1022. Details are described below.

Operation 1021: Perform the first detection mode on the image, and when the first region including the target object is detected from the image, generate the first detection result representing that the image includes the first region.

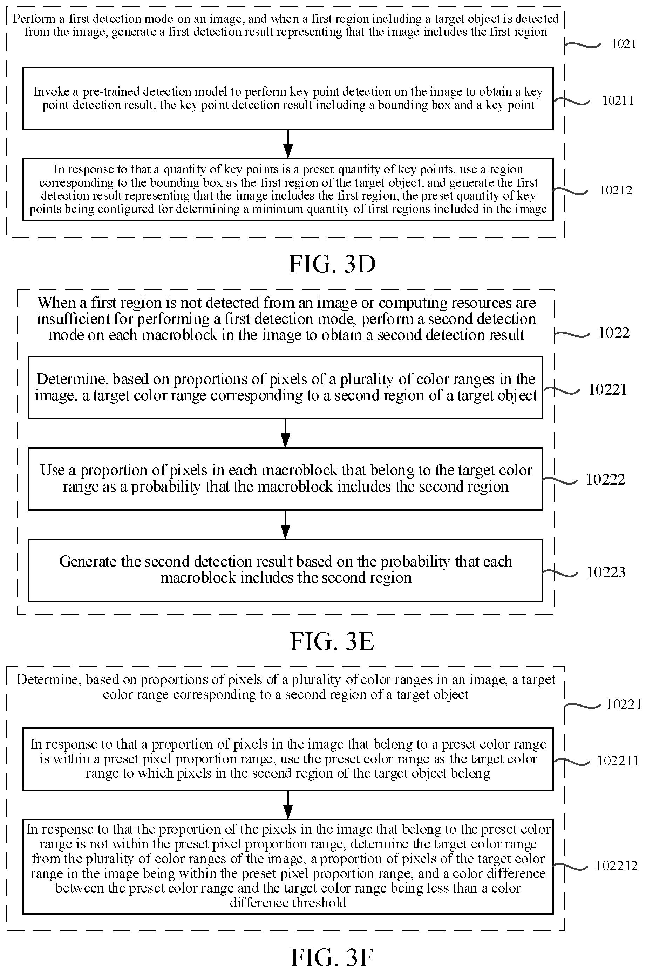

In some embodiments, as shown in FIG. 3D, operation 1021 shown in FIG. 3C may be implemented by the following operation 10211 to operation 10212. Details are described below.

Operation 10211: Invoke a pre-trained detection model to perform key point detection on the image to obtain a key point detection result, the key point detection result including a bounding box and a key point.

In some embodiments, key point detection is performed on the image through the pre-trained detection model to obtain the key point detection result, the key point detection result including the bounding box and the key point.

In an example, the detection model may be a multi-task cascaded convolutional network (MTCNN) or YOLO model-based YOLOv8-Pose. The MTCNN includes three parts: a proposal network (P-Net), a refine network (R-Net), and an output network (O-Net). Key point detection performed by the MTCNN is used below as an example for description.

For example, performing key point detection through the MTCNN includes: In a first stage, the P-Net generates a proposal, and the P-Net outputs a bounding box and a confidence in the bounding box. A part of proposals with high confidences may be selected as inputs for subsequent processing. In a second stage, the R-Net refines the proposal generated by the P-Net, and the R-Net receives an output of the P-Net and further adjusts a location and a size of the bounding box, to output a more precise bounding box and confidence. In a third stage, the O-Net performs final processing on a result outputted by the R-Net. Specifically, the O-Net is configured to further refine the bounding box and detect a key point location, to output a final bounding box and key point location.

For example, the target object imaged in the image is a human being. Key point locations may be centers of two eyes, two corners of the mouth, and a nose tip in a face region.

For example, the target object imaged in the image is an object. Key point locations may be coordinate locations of the object that have particular meanings. For example, when the object is an automobile, the key point locations may be a center of a wheel hub of the automobile and a center of a lamp of the automobile.

Operation 10212: In response to that a quantity of key points is a preset quantity of key points, use a region corresponding to the bounding box as the first region of the target object, and generate the first detection result representing that the image includes the first region, the preset quantity of key points being configured for determining a minimum quantity of first regions included in the image.

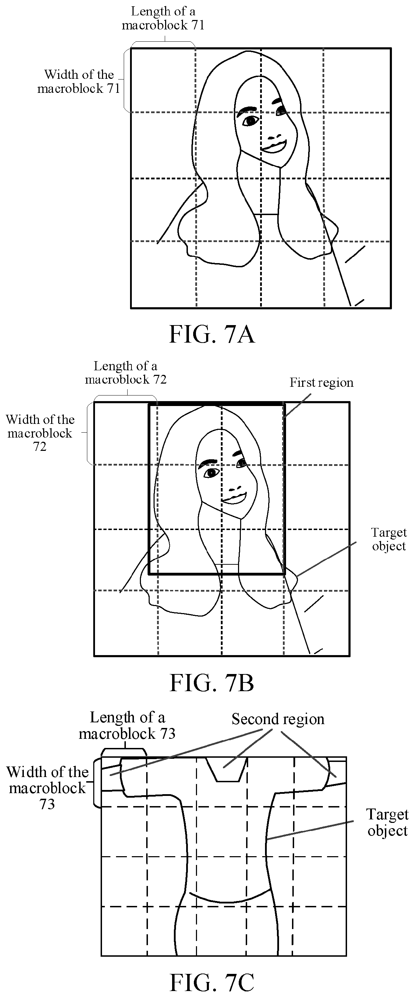

In some embodiments, when the quantity of key points is the preset quantity of key points, the region corresponding to the bounding box is used as the first region of the target object, and the first detection result representing that the image includes the first region is generated, the preset quantity of key points being configured for determining the minimum quantity of first regions included in the image. The quantity of key points is not limited in this embodiment of this application. For example, the target object is a human face. FIG. 7B is a diagram of a first region according to an embodiment of this application. The region corresponding to the bounding box is the first region.

In the foregoing example in which the target object imaged in the image is a human being, the first region is a face region. When the quantity of key points is the preset quantity (for example, 5) of key points, the first detection result represents that the image includes the face region.

In the foregoing example in which the target object imaged in the image is an object, the first region is a main region of the object (for example, a body of an automobile). When the quantity of key points is the preset quantity (for example, 3) of key points, the first detection result represents that the image includes the main region (namely, the first region).

Still refer to FIG. 3C. Operation 1022: When the first region is not detected from the image or computing resources are insufficient for performing the first detection mode, perform the second detection mode on each macroblock in the image to obtain the second detection result.

In some embodiments, the macroblock is a square combination of adjacent pixels in the image. A size of the macroblock may be 16×16 or 8×8, measured in units of pixels. A specific size of the macroblock is not limited in this embodiment of this application.

For example, FIG. 7A is a diagram of macroblocks in an image according to an embodiment of this application. The image is divided into a plurality of macroblocks based on a preset macroblock size. When the first region of the target object shown in FIG. 7B is not detected (for example, because the first region of the target object is not displayed in the image or the first region is not detected due to blocking, rotation, a scale change, or motion blur of the target object in the image) or computing resources are insufficient for performing the first detection mode, the second detection mode is performed on each macroblock in the image to obtain the second detection result.

For example, whether computing resources are insufficient may be detected in the following manners:
(1) Detect system resources: For example, whether CPU usage remains at a high level (for example, is higher than preset usage) for a long time is detected. For example, if the CPU usage approaches or reaches 100%, CPU resources are insufficient.
(2) Detect encoding performance: For example, if an encoding speed is lower than a preset encoding speed, performance of an encoding algorithm is affected by insufficient computing resources.
(3) Detect system response time: For example, if task processing time of a system significantly increases (for example, is longer than preset task processing time), a task queue is backlogged due to insufficient computing resources.
(4) Detect temperature and energy consumption: For example, temperature of hardware is detected. If temperature of a CPU or a graphics processing unit (GPU) continuously increases (for example, is higher than a preset temperature threshold), computing resources are insufficient, or computing resources are excessively used.
(5) Detect an error log: For example, system logs are checked for an error prompt or warning about insufficient resources; or system resources are detected by using a detection tool (for example, Nagios or Zabbix), and an alarm is initiated when computing resources are insufficient.

In some embodiments, as shown in FIG. 3E, operation 1022 shown in FIG. 3C may be implemented by the following operation 10221 to operation 10223. Details are described below.

Operation 10221: Determine, based on proportions of pixels of a plurality of color ranges in the image, a target color range corresponding to a second region of the target object.

In some embodiments, as shown in FIG. 3F, operation 10221 shown in FIG. 3E may be implemented by the following operation 102211 to operation 102212. Details are described below.

Operation 102211: In response to that a proportion of pixels in the image that belong to a preset color range is within a preset pixel proportion range, use the preset color range as the target color range to which pixels in the second region of the target object belong.

In some embodiments, the preset color range is used as the target color range to which the pixels in the second region of the target object belong in response to that the proportion, in the image, of the pixels in the image that belong to the preset color range is within the preset pixel proportion range (for example, 8% to 32%), to be specific, conforms to a distribution range of a proportion of the pixels in the second region of the image: being greater than or equal to a minimum value of a preset pixel proportion range, and being less than or equal to a maximum value of the preset pixel proportion range.

In some embodiments, the preset color range is an empirical color range obtained by collecting statistics on color values of pixels in an image sample that belong to a calibrated second region.

For example, the target object imaged in the image is a human being. The preset color range is configured for representing an empirical color value of a skin color. It is assumed that different colors, for example, red in an RGB color space, are represented by a combination of three channels in the RGB color space: red, green, and blue. An integer value of each color channel ranges from 0 to 255. To be specific, 256×256×256=16777216 colors may be represented by the RGB color space. Then the 16777216 colors are arranged in a color gradient manner, for example, from white to light yellow, from light yellow to yellow, from yellow to orange, and from orange to red. For example, RGB values ([248, 255], [197, 234], [183, 230]) may be used as the preset color range. The color range may alternatively be a range obtained by equally dividing color values in the color space, or a set of discrete color values. For example, if empirical color values corresponding to the skin color are (248, 220, 190) and (248, 201, 160), the preset color range may be represented as {(248, 220, 190), (248, 201, 160)}. A specific manner of selecting the color range is not limited in this embodiment of this application.

For example, the target object imaged in the image is an object. The preset color range is configured for representing a color value of a local region of the object. For example, when the object is an automobile, the preset color range may represent a color of a wheel. For example, if the wheel is black, the preset color range may be represented as RGB values ([0, 30], [0, 30], [0, 30]).

Operation 102212: In response to that the proportion of the pixels in the image that belong to the preset color range is not within the preset pixel proportion range, determine the target color range from the plurality of color ranges of the image, a proportion of pixels of the target color range in the image being within the preset pixel proportion range, and a color difference between the preset color range and the target color range being less than a color difference threshold.

In some embodiments, FIG. 3O is a schematic flowchart of determining a target color range according to an embodiment of this application. When the proportion of the pixels in the image that belong to the preset color range is not within the preset pixel proportion range, the target color range may be determined from the plurality of color ranges through the following operation 601 to operation 604. Details are described below.

Operation 601: Obtain, from the plurality of color ranges, a color range with a proportion of pixels being within the preset pixel proportion range as a candidate color range.

In some embodiments, in response to that the proportion of the pixels in the image that belong to the preset color range is not within the preset pixel proportion range (for example, is less than the minimum value of the preset pixel proportion range, or is greater than the maximum value of the preset pixel proportion range), the candidate color range is determined from the plurality of color ranges of the image, a proportion of pixels of the candidate color range in the image being within the preset pixel proportion range.

Operation 602: Determine whether a color difference between the candidate color range and the preset color range is less than a preset color difference threshold.

In some embodiments, in response to that the color difference is less than the preset color difference threshold, processing in operation 603 is performed; or in response to that the color difference is greater than or equal to the preset color difference threshold, processing in operation 604 is performed.

Operation 603: Use the candidate color range as the target color range.

In some embodiments, a candidate color range whose color difference with the preset color range is less than the preset color difference threshold is used as the target color range. For example, each color range may include a plurality of continuous color values, and a quantity of the plurality of color values included in each range is the same. A difference between a maximum color value of the preset color range and a maximum color value of the candidate color range is less than the color difference threshold.

For example, it is assumed that the preset color range is ([248, 255], [197, 234], [183, 230]) and the preset pixel proportion range is 8% to 32%. In response to that a pixel proportion of the preset color range is 40% and is not within the preset pixel proportion range, the candidate color range is determined from the plurality of color ranges of the image. For example, a pixel proportion of a color range ([244, 251], [190, 230], [180, 220]) is 30% and is within the preset pixel proportion range, and the color range is used as the candidate color range. A color difference between the preset color range ([248, 255], [197, 234], [183, 230]) and the candidate color range ([244, 251], [190, 230], [180, 220]) is 18 (a difference between maximum values of sums of RGB values of the two color ranges, for example, a maximum value of a sum of RGB values corresponding to ([248, 255], [197, 234], [183, 230]) is 255+234+230=719, and a maximum value of a sum of RGB values corresponding to ([244, 251], [190, 230], [180, 220]) is 251+230+220=701), and is less than the preset color difference threshold 30. In this case, the candidate color range ([244, 251], [190, 230], [180, 220]) is used as the target color range. The calculation of the color difference between the two color ranges herein is merely an example, and a specific calculation method is not limited in this embodiment of this application.

For example, the color difference threshold may be set in the following manners: (1) being set based on manual experience; and (2) being determined based on big data statistics results: For example, statistics are collected on an average value of differences between adjacent color ranges based on different color ranges manually calibrated in a plurality of samples, and the average value is used as the color difference threshold.

In some embodiments, after the target color range is determined from the plurality of color ranges of the image, the preset color range may be further updated to the target color range (corresponding to the candidate color range in operation 603), the updated preset color range being configured for performing the second detection mode on a new to-be-encoded image.

For example, the target object imaged in the image is a human being. For example, in a livestreaming scenario, a difference in light intensity may cause a difference in color values of same yellow-toned skin under different light. A skin region (the second region) under different light can be better detected by setting the color difference threshold. Assuming that the preset color range is updated during processing of the first frame of image in the second detection mode, light has changed. If the second detection mode continues to be used for the second frame of image, the second region is detected based on the updated preset color range, to adapt to the change in light.

Operation 604: Use the preset color range as the target color range.

In some embodiments, when the color difference between the candidate color range and the preset color range is greater than or equal to the preset color difference threshold, processing in a subsequent operation is performed by using the preset color range as the target color range.

The color difference threshold is introduced, to incorporate impact of light on detection accuracy of the second region (an illumination-sensitive region). In this way, a new preset color range is used when the second detection mode is performed on a subsequent to-be-encoded image, to adaptively match a change in the second region in a video image with illumination, to improve detection accuracy of the second region.

Still refer to FIG. 3E. Operation 10222: Use a proportion of pixels in each macroblock that belong to the target color range as a probability that the macroblock includes the second region.

In some embodiments, the proportion of the pixels in each macroblock that belong to the target color range is obtained as the probability that the macroblock includes the second region. For example, a proportion of pixels in a macroblock 1 that belong to the target color range is 80/100 (assuming that 100 is a quantity of pixels included in the macroblock 1). In this case, a probability that the macroblock 1 includes the second region is 0.8.

Operation 10223: Generate the second detection result based on the probability that each macroblock includes the second region.

In some embodiments, probabilities that each macroblock includes the second region are combined into the second detection result. For example, the second detection result is represented as "[macroblock 1: 0.01, macroblock 2: 0.10, ..., macroblock N: 0.02]".

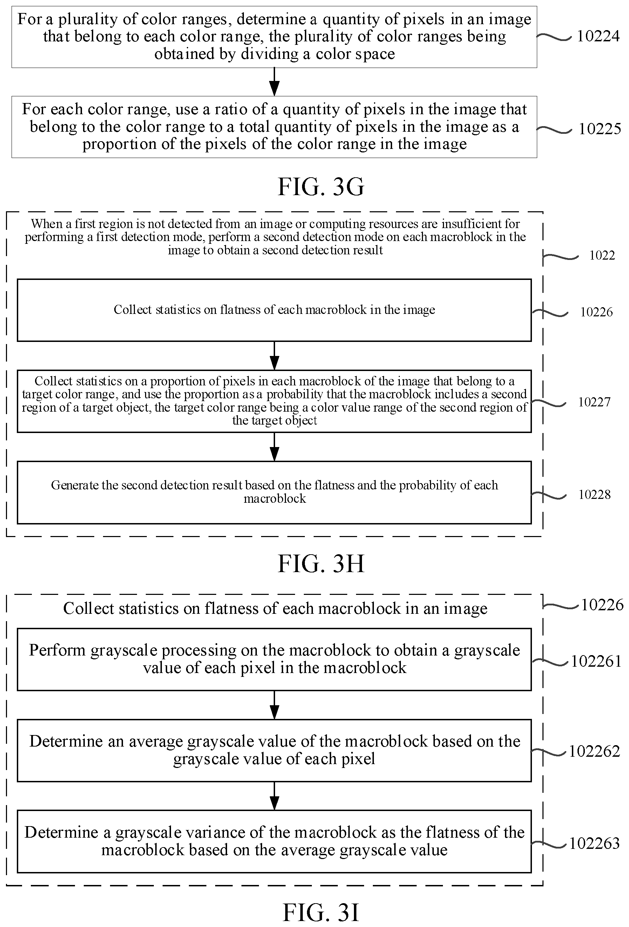

In some embodiments, as shown in FIG. 3G, before the second detection mode is performed on each macroblock in the image to obtain the second detection result, the following operation 10224 to operation 10225 may be performed. Details are described below.

Operation 10224: For the plurality of color ranges, determine a quantity of pixels in the image that belong to each color range, the plurality of color ranges being obtained by dividing a color space.

In some embodiments, a color value of each pixel in the image is determined (for example, RGB values of the pixel are obtained, and the RGB values are mapped to a color number as a color value, for example, RGB values (255, 255, 255) corresponding to white are mapped to 0). For each color value, a color range to which the color value belongs is determined (for example, one color range corresponds to a plurality of color values), and a quantity of pixels in the image that belong to the color range is determined. Each color range may include a plurality of continuous color values, and a quantity of the plurality of color values included in each range is the same. The plurality of color ranges are obtained by dividing the color space.

Operation 10225: For each color range, use a ratio of a quantity of pixels in the image that belong to the color range to a total quantity of pixels in the image as a proportion of the pixels of the color range in the image.

In some embodiments, when the target object is a living creature imaged in the image, the first region is a face region of the living creature (for example, a face region of a human being), and the second region is a skin region of the living creature (FIG. 7C is a diagram of a second region according to an embodiment of this application, and for example, skin regions corresponding to arms and the neck of the target object shown in FIG. 7C are used as the second region).

In some embodiments, when the target object is an object imaged in the image, the first region is a main region of the object (for example, a main body (which may not include wheels) of an automobile), and the second region is a local region of the object (for example, a lamp of the automobile or a wheel hub of the automobile).

For example, the local region is a recognizable local region in the main region, is a region that can prominently represent an object feature and that is of great importance to object recognition and classification, and may include, for example, the following types of regions: (1) a texture feature region: a region with a unique texture pattern, for example, a pattern on clothes or a texture in nature (for example, a tree leaf or animal fur); (2) a color feature region: a specific color or color combination that may be configured for distinguishing between different parts of the object, for example, an iconic color of clothes or a color of a vehicle; and (3) a shape feature region: a specific geometric shape or contour, for example, symmetry of the object, or a circular or elliptic region.

In some embodiments, as shown in FIG. 3H, operation 1022 shown in FIG. 3C may be implemented by the following operation 10226 to operation 10228. Details are described below.

Operation 10226: Collect statistics on flatness of each macroblock in the image.

In some embodiments, as shown in FIG. 3I, operation 10226 shown in FIG. 3H may be implemented by performing the following operation 102261 to operation 102263 for each macroblock. Details are described below.

Operation 102261: Perform grayscale processing on the macroblock to obtain a grayscale value of each pixel in the macroblock.

In some embodiments, the grayscale value of each pixel may be calculated by using a weighted averaging method. For example, weighted averaging is performed on RGB values of each pixel to obtain the grayscale value of the pixel. For example, weights of R, G, and B are 0.299, 0.587, and 0.114 respectively. Alternatively, the grayscale value of each pixel may be determined by using an averaging method. To be specific, the RGB values are added up, and then a sum is divided by 3. Alternatively, another more complex grayscale processing method is used. A specific grayscale processing method is not limited in this embodiment of this application.

Operation 102262: Determine an average grayscale value of the macroblock based on the grayscale value of each pixel.

In some embodiments, each pixel of the macroblock is traversed, grayscale values of all pixels are accumulated to obtain a total grayscale value, and the total grayscale value is divided by a quantity of pixels in the macroblock (for example, for a 16×16 macroblock, the quantity is 256) to obtain the average grayscale value of the macroblock.

Operation 102263: Determine a grayscale variance of the macroblock as the flatness of the macroblock based on the average grayscale value.

In some embodiments, all pixels in the macroblock are traversed, a square of a difference between the grayscale value of each pixel and the average value is calculated, these differences of squares are accumulated and then a sum is divided by a total quantity of pixels in the macroblock to obtain the grayscale variance of the macroblock, and the grayscale variance is used as the flatness of the macroblock. Herein, a smaller value of the grayscale variance of the macroblock indicates higher flatness of the macroblock.

Still refer to FIG. 3H. Operation 10227: Collect statistics on a proportion of pixels in each macroblock of the image that belong to the target color range, and use the proportion as a probability that the macroblock includes the second region of the target object, the target color range being a color value range of the second region of the target object.

In some embodiments, the proportion of the pixels in each macroblock that belong to the target color range is used as the probability that the macroblock includes the second region. For a specific implementation, refer to the foregoing descriptions of operation 10222. Details are not described herein again.

Operation 10228: Generate the second detection result based on the flatness and the probability of each macroblock.

In some embodiments, statistics are collected on the flatness and the probability of each macroblock, and the flatness and the probability of each macroblock are combined into the second detection result. For example, the second detection result is represented as "[macroblock 1: (flatness 0.90, probability 0.01), macroblock 2: (flatness 0.90, probability 0.10), ..., macroblock N: (flatness 0.80, probability 0.02)]".

The second detection result is generated based on the flatness of each macroblock and the probability that the macroblock includes the second region. A texture feature of the macroblock is indicated by the flatness, and a color matching degree is indicated by the probability, to comprehensively perform determining on the second region from two dimensions, that is, a texture and a color, and improve richness and accuracy of the second detection result.

In some other embodiments, statistics are collected on the flatness of each macroblock in the image, and flatness of all macroblocks is combined into the second detection result.

Through operation 1021 to operation 1022, the at least one image detection mode is performed on the image based on the preset priorities of the plurality of image detection modes to obtain the detection result of the image. Specifically, the priority of the first detection mode is higher than the priority of the second detection mode, and definition and an encoding bitrate are mainly considered for setting the priorities. Specifically, to achieve a technical effect of higher definition of the target region (for example, the first region or the second region) in the image in a low-bitrate environment, the technical effect is measured by a bitrate allocated to a macroblock. To be specific, a higher bitrate allocated to a macroblock in the target region in the same image indicates higher definition of the macroblock.

The priority of the first detection mode is higher than the priority of the second detection mode because the first region correspondingly detected in the first detection mode is a region with most significant impact on perception of definition (for example, in a livestreaming scenario, a face of a streamer is focused on). Therefore, the first detection mode is preferentially performed. If the first region is detected, a QP setting solution applicable to the first region is subsequently used (refer to descriptions of operation 1031 to operation 1032 below), so that a bitrate allocated to the first region is higher than that of a non-first region, to ensure definition of the first region and save the bitrate.

When the first region is not detected or computing resources are insufficient for performing the first detection mode, the second region (for example, a skin region of a streamer in a livestreaming scenario) in the image and the flatness of each macroblock are detected in the second detection mode. The probability that each macroblock includes the second region and the flatness are combined into the second detection result, and a corresponding QP setting solution is used (refer to descriptions of operation 1033 to operation 1035 below), so that a bitrate of the second region is higher than a bitrate of a non-second region, to ensure definition of the second region and save the bitrate.

A QP is specifically set based on detection results of different detection modes, to ensure that a higher bitrate is allocated to a key region in the image, to enable the key region to have higher definition at a low encoding bitrate.

Still refer to FIG. 3A. Operation 103: Separately set a QP for at least one macroblock in the image based on the detection result.

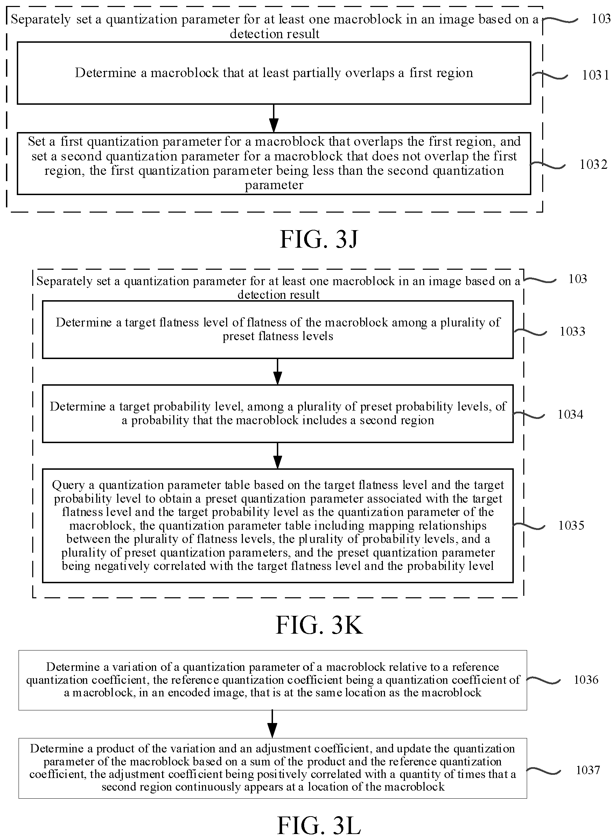

In some embodiments, when the detection result is the first detection result and the first detection result represents that the image includes the first region of the target object, as shown in FIG. 3J, operation 103 shown in FIG. 3A may be implemented by the following operation 1031 to operation 1032. Details are described below.

Operation 1031: Determine a macroblock that at least partially overlaps the first region.

In some embodiments, a macroblock that overlaps the first region, for example, a macroblock that partially overlaps the first region or a macroblock that is completely located in the first region, is determined.

For example, as shown in FIG. 7B, the first macroblock in the first row is a macroblock that partially overlaps the first region, and the second macroblock in the first row is a macroblock that is completely located in the first region.

Operation 1032: Set a first QP for a macroblock that overlaps the first region, and set a second QP for a macroblock that does not overlap the first region, the first QP being less than the second QP.

In some embodiments, the first QP is set for the macroblock that overlaps the first region, and the second QP is set for the macroblock that does not overlap the first region, the first QP being less than the second QP. The QP is a sequence number of a quantization step size (QStep). The QP being a minimum value (for example, 0) indicates finest-grained quantization. In this case, most details in the macroblock are retained. The QP being a maximum value (for example, 51) indicates coarsest-grained quantization. In this case, details in the macroblock are lost. During encoding, an encoder may automatically change a value of the QP based on an actual status of the image (during this process, the first QP is kept less than the second QP), and then change the QStep. Specific values of the first QP and the second QP are not limited in this embodiment of this application.

For example, a QP corresponding to each macroblock may be determined through rate distortion optimization (RDO). It is assumed that the first QP corresponds to a first QP range and the second QP corresponds to a second QP range, a minimum value of the second QP range being greater than a maximum value of the first QP range. During encoding, the encoder separately determines, by using an RDO algorithm, final QPs for the macroblock that overlaps the first region (the first QP is selected from the first QP range) and the macroblock that does not overlap the first region (the second QP is selected from the second QP range): For each macroblock, candidate QPs in a QP range to which the macroblock belongs are traversed, a rate distortion cost (RDcost) (to be specific, a weighted sum of image quality loss and bitrate consumption after the macroblock is encoded) corresponding to each candidate QP value is calculated, and a candidate QP value with a smallest RDcost is selected as a final QP of the macroblock. In addition, it is ensured that a final QP (the first QP) of the macroblock that overlaps the first region is always less than a final QP (the second QP) of the macroblock that does not overlap the first region, to optimize overall encoding efficiency while preferentially retaining details of the first region.

For example, it is assumed that a value range of the QP is [0, 51]. QP=0 corresponds to the finest-grained quantization (highest image quality and a maximum bitrate), and QP=51 corresponds to the coarsest-grained quantization (lowest image quality and a minimum bitrate). The first QP range corresponding to the first QP is set to [19, 25], and the second QP range corresponding to the second QP is set to [31, 37]. A macroblock A in the image is a macroblock that overlaps the first region (for example, a face region). The encoder traverses each candidate QP value in [19, 25], and separately calculates an RDcost corresponding to each candidate value. It is assumed that when the candidate QP=19, image quality loss (measured by a mean square error (MSE)) of the macroblock A after encoding is 6, and bitrate consumption is 125 bits. Through calculation based on a weighting coefficient λ=0.1, an RDcost=6+0.1×125=18.5, and 18.5 is a minimum RDcost. In this case, a first QP of the macroblock A is 19. For another example, a macroblock B in the image is a macroblock that does not overlap the first region. The encoder traverses each candidate QP value in [31, 37]. It is assumed that when the candidate QP=31, an MSE of the macroblock B=22, bitrate consumption is 42 bits, an RDcost=22+0.1×42=26.2, and 26.2 is a minimum RDcost. In this case, a second QP of the macroblock B is 31.

In some embodiments, when the detection result is the second detection result and the second detection result represents the flatness of each macroblock and the probability that the macroblock includes the second region of the target object, as shown in FIG. 3K, operation 103 shown in FIG. 3A may be implemented by performing the following operation 1033 to operation 1035 for each macroblock. Details are described below.

Operation 1033: Determine a target flatness level of the flatness of the macroblock among a plurality of preset flatness levels.

In some embodiments, the target flatness level of the flatness of the macroblock among the plurality of preset flatness levels divided into a high level, a medium level, and a low level based on values is determined. For example, a flatness value (a value of the grayscale variance) range [0.005, 0.05) is at a high flatness level, [0.05, 0.01) is at a medium flatness level, and [0.01, 0.1) is at a low flatness level. A higher flatness level indicates higher flatness of the image in the macroblock (for example, a flatness degree of a background region in the image is higher than a flatness degree of a face region in the image). A specific quantity of levels and a division range of the plurality of flatness levels are not limited in this embodiment of this application.

For example, the plurality of preset flatness levels may be divided in the following manner: collecting statistics on flatness of image samples of a same type (for example, a live video or an advertisement video) to obtain a flatness value range, and dividing the flatness value range into a plurality of sub-ranges, each sub-range corresponding to one level.

Operation 1034: Determine a target probability level, among a plurality of preset probability levels, of the probability that the macroblock includes the second region.

In some embodiments, the target probability level, among the plurality of preset probability levels divided into a high level, a medium level, and a low level based on values, of the probability that the macroblock includes the second region of the target object is determined.

For example, it is assumed that a probability value range [0.1, 0.3) is at a low probability level, [0.3, 0.6) is at a medium probability level, and [0.6, 1] is at a high probability level. A higher probability level indicates a larger overlapping part between the macroblock and the second region. A specific quantity of levels and a division range of the plurality of probability levels are not limited in this embodiment of this application.

Operation 1035: Query a QP table based on the target flatness level and the target probability level to obtain a preset QP associated with the target flatness level and the target probability level as the QP of the macroblock, the QP table including mapping relationships between the plurality of flatness levels, the plurality of probability levels, and a plurality of preset QPs, and the preset QP being negatively correlated with the target flatness level and the probability level.

In some embodiments, the QP table is queried based on the target flatness level and the target probability level to obtain the preset QP associated with the target flatness level and the target probability level as the QP of the macroblock.

For example, there are two probability levels and two flatness levels, the target object in the image is a streamer in a livestreaming scenario, and the second region corresponds to skin of the streamer. The QP table may be represented as Table 1:

**Table 1**

| Probability level | Flatness level | QP |
|---|---|---|
| High | High | This may correspond to a skin region (the second region) of the streamer, and a low QP needs to be used, to retain more image details. |
| High | Low | This may correspond to a facial feature region of the streamer, and a medium QP needs to be used, to avoid a phenomenon that an eyelash region, an eyebrow region, and the like occupy a high encoding bitrate if a very low QP is kept. |
| Low | High | This may correspond to a desktop or background wall region in the image, and a medium QP needs to be used. |
| Low | Low | This may correspond to a clothes or texture detail region of the streamer, and a very high QP needs to be used, to avoid a waste of a bitrate. |

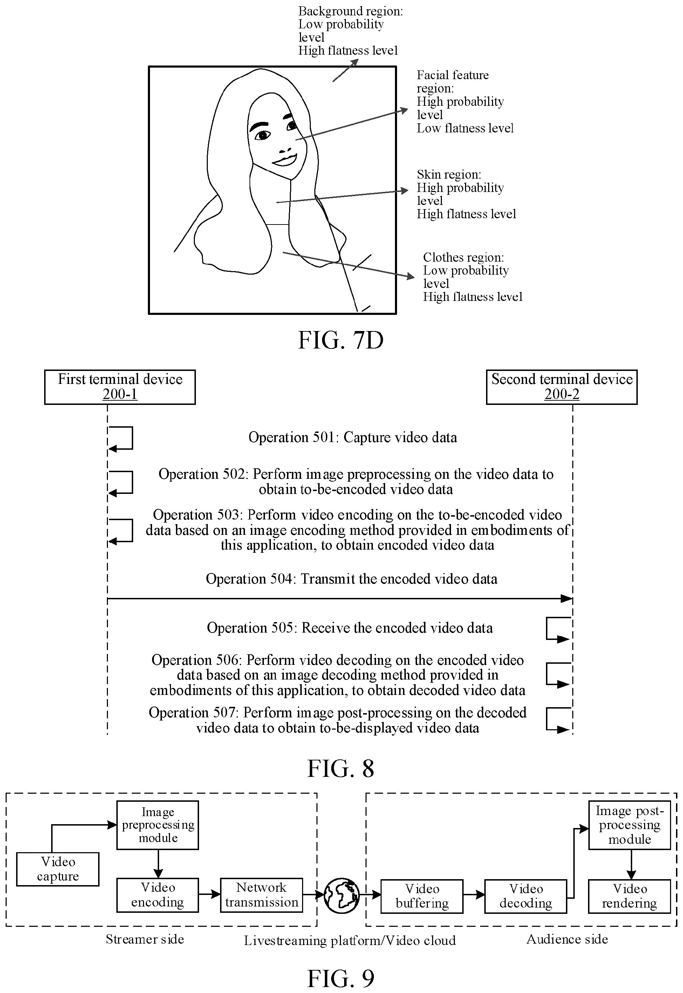

For example, FIG. 7D is a diagram of probability levels and flatness levels of an image according to an embodiment of this application. A value range of the QP in Table 1 may be set based on an application scenario. During image encoding, the encoder may automatically change a value of the QP based on an actual status of the image. The value of the QP is not limited in this embodiment of this application.

The flatness of the macroblock is mapped to the target flatness level among the plurality of flatness levels, the probability that the macroblock includes the second region is mapped to the target probability level among the plurality of probability levels, and the preset QP table is queried based on the target flatness level and the target probability level to determine the corresponding preset QP, so that an encoding bitrate can be accurately allocated, and image details can be differentially retained. For example, for a region that needs to be mainly displayed (for example, a skin region of a streamer in a livestreaming scenario corresponds to a high probability level and a high flatness level), more abundant details are retained by using a low QP; for a non-key region with redundant details (for example, a clothes or texture region of the streamer corresponds to a low probability level and a low flatness level), a bitrate is properly saved by using a high QP; and other regions (for example, facial features and a desktop background) match a medium QP to balance details and bitrate consumption. This avoids loss of key details or a waste of a bitrate caused by uniform quantization, and an encoding policy can be adaptively adjusted based on an image content feature, to finally improve overall encoding efficiency and optimize bandwidth resource usage while ensuring display quality of a core region.

In some embodiments, when the detection result is the second detection result and the second detection result represents the probability that each macroblock includes the second region of the target object, the following processing is performed on each macroblock: generating a QP of the macroblock based on the probability that the macroblock includes the second region of the target object, the probability that the macroblock includes the second region being negatively correlated with the QP of the macroblock.

For example, the probability that the macroblock includes the second region of the target object is negatively correlated with the QP of the macroblock. To be specific, a higher probability value of the macroblock indicates a lower QP corresponding to the macroblock. During image encoding, the encoder may automatically change a value of the QP based on an actual status of the image. The value of the QP is not limited in this embodiment of this application.

The QP is generated based on the probability that the macroblock includes the second region of the target object. To be specific, a higher probability that the macroblock includes the second region corresponds to a lower value of the QP, and a lower probability that the macroblock includes the second region corresponds to a higher value of the QP. When image details of a macroblock corresponding to a high probability are ensured, a macroblock corresponding to a low probability may be properly compressed by using a high QP, to balance image quality of a core region of the image and overall encoding efficiency.

In some embodiments, when the detection result is the second detection result and the second detection result represents the flatness of each macroblock, the following processing is performed on each macroblock: generating a QP of the macroblock based on the flatness of the macroblock, the flatness of the macroblock being negatively correlated with the QP of the macroblock.

For example, the flatness of the macroblock (the grayscale variance of the macroblock) is negatively correlated with the QP of the macroblock. To be specific, a larger grayscale variance of the macroblock (higher unevenness of the image in the macroblock) indicates a lower quantization coefficient corresponding to the macroblock. During image encoding, the encoder may automatically change a value of the QP based on an actual status of the image. The value of the QP is not limited in this embodiment of this application.

When the detection result is the second detection result representing the flatness of each macroblock, for each macroblock, a QP is generated based on the flatness of the macroblock, and the flatness of the macroblock is negatively correlated with the QP. To be specific, higher flatness (a smaller grayscale variance) of the macroblock indicates a higher value of the QP, and lower flatness (a larger grayscale variance) of the macroblock indicates a lower value of the QP. In this way, a low QP is set for a macroblock with low flatness (abundant textures) to retain details, and a high QP is set for a macroblock with high flatness (a simple texture) to compress redundancy, to improve overall encoding efficiency while ensuring quality of a key texture region of the image, and achieve an optimized balance between image quality and a bitrate.

Through operation 1031 to operation 1035, more appropriate QPs are set for different macroblocks based on detection results, at different priorities, of the image, to implement finer-grained encoding control. This helps transmit a higher-quality image at limited bandwidth, to meet a requirement of a user for a high-definition image.

In some embodiments, after the QP is separately set for the at least one macroblock in the image based on the detection result, as shown in FIG. 3L, the following operation 1036 to operation 1037 may be further performed for each macroblock. Details are described below.

Operation 1036: Determine a variation of the QP of the macroblock relative to a reference quantization coefficient, the reference quantization coefficient being a quantization coefficient of a macroblock, in an encoded image, that is at the same location as the macroblock.

For example, it is assumed that a QP of a macroblock 1 in a to-be-encoded image n+4 is 20, a quantization coefficient of a macroblock 1 in a previous frame of encoded image n+3 is 40 (the reference quantization coefficient), and a variation of the QP of the macroblock 1 relative to the reference quantization coefficient is 20 - 40 = -20.

Operation 1037: Determine a product of the variation and an adjustment coefficient, and update the QP of the macroblock based on a sum of the product and the reference quantization coefficient, the adjustment coefficient being positively correlated with a quantity of times that the second region continuously appears at a location of the macroblock.

For example, the adjustment coefficient may be represented as y=ax, where x represents the quantity of times that the second region continuously appears at the location of the macroblock, y represents the adjustment coefficient, and a is a constant greater than 0.

In the foregoing example, it is assumed that the second region appears in all of an n^{th} frame of image to an (n+4)^{th} frame of image and a is 0.02. In this case, the adjustment coefficient is 0.02×5=0.1, a product of the adjustment coefficient and a variation (-20) between the image n+4 and the image n+3 is -2, and a sum of the product and the reference quantization coefficient is 40+(-2)=38. 38 is used as an updated QP of the macroblock 1 in the to-be-encoded image n+4. Herein, the adjustment coefficient is positively correlated with the quantity of times that the second region continuously appears at the location of the macroblock. To be specific, a larger quantity of times that the second region continuously appears at a location of a same macroblock in a plurality of to-be-encoded images indicates a larger value of the adjustment coefficient (for example, a highest value is 1).

The adjustment coefficient is introduced, so that a QP of a macroblock at a same location does not suddenly change during encoding, that is, a value of the QP is smoothed, to avoid a significant change in the QP.

Still refer to FIG. 3A. Operation 104: Encode each macroblock based on the QP of each macroblock.

An H.264 encoding standard is used as an example. The encoding each macroblock based on a QP of each macroblock may be implemented in the following manner: converting image data corresponding to each macroblock from a pixel domain to a frequency domain by using a transform method, for example, discrete cosine transform (DCT), to obtain a transform coefficient of each macroblock; quantizing the transform coefficient by using the QP, where during quantization, precision of the transform coefficient is reduced based on the QP, to reduce data redundancy; and encoding a quantized transform coefficient through context-based adaptive binary arithmetic coding (CABAC), context-adaptive variable length coding (CAVLC), or the like, to obtain macroblock encoded data of each macroblock.

Operation 105: Generate image encoded data of the image based on macroblock encoded data obtained through encoding.

In some embodiments, after each macroblock is encoded, macroblock encoded data thereof is combined. The macroblock encoded data may include macroblock header information (for example, a macroblock type and a QP) and compressed data of the macroblock. Specifically, macroblock encoded data of all macroblocks is combined, and is encapsulated based on a syntax structure of H.264 to form image encoded data of a frame of to-be-encoded image. The macroblock data may alternatively be encapsulated into network abstraction layer units (NALUs) to facilitate storage or transmission.

Through operation 101 to operation 105, detection is performed on the image based on priorities of a plurality of detection modes, and a QP is set for each macroblock in the image based on detection results of different priorities, so that more appropriate QPs can be more effectively set for different macroblocks based on detection results of the image in image detection modes of different priorities, to implement finer-grained encoding control. This helps transmit a higher-quality image at a low encoding bitrate or a low encoding standard, to meet a requirement of a user for a high-definition image.

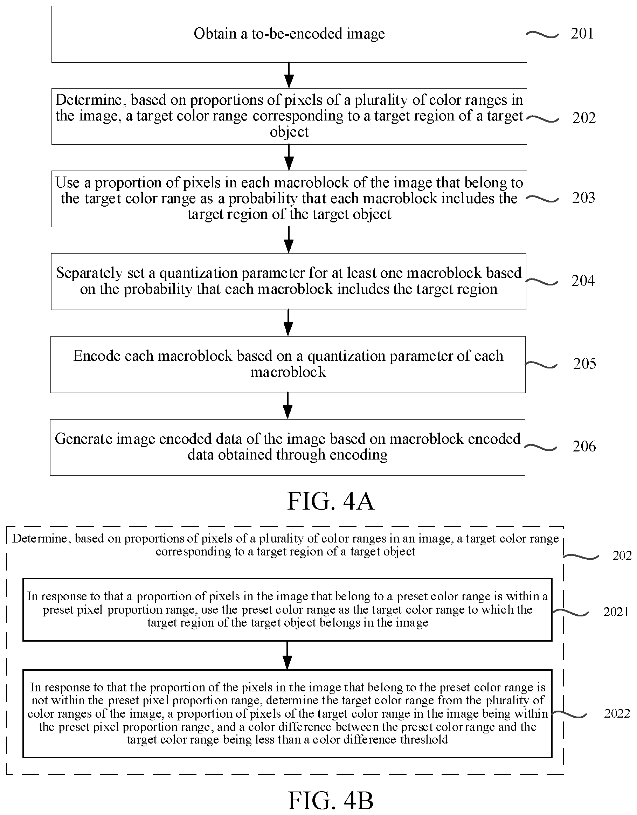

The image encoding method provided in the embodiments of this application is described by using an example in which the image encoding device (the terminal device or the server) is configured to encode an image. FIG. 4A is a thirteenth schematic flowchart of an image encoding method according to an embodiment of this application. The method is described with reference to operations shown in FIG. 4A.

Operation 201: Obtain a to-be-encoded image.

In some embodiments, an uncompressed raw image is obtained (refer to the foregoing descriptions of operation 1011), and the raw image is used as the to-be-encoded image; or the raw image is downsampled, and an obtained downsampled image is used as the to-be-encoded image (refer to the foregoing descriptions of operation 1012).

Operation 202: Determine, based on proportions of pixels of a plurality of color ranges in the image, a target color range corresponding to a target region of a target object.

In some embodiments, as shown in FIG. 4B, operation 202 shown in FIG. 4A may be implemented by the following operation 2021 to operation 2022. Details are described below.

Operation 2021: In response to that a proportion of pixels in the image that belong to a preset color range is within a preset pixel proportion range, use the preset color range as the target color range to which the target region of the target object belongs in the image.

In some embodiments, the preset color range is used as the target color range to which the pixels in the second region of the target object belong in response to that the proportion, in the image, of the pixels in the image that belong to the preset color range (for example, representing a range corresponding to an empirical color value of a skin color) is within the preset pixel proportion range (for example, 8% to 32%), to be specific, conforms to a distribution range of a proportion of the pixels in the second region of the image: being greater than or equal to a minimum value of a preset pixel proportion range, and being less than or equal to a maximum value of the preset pixel proportion range.

Operation 2022: In response to that the proportion of the pixels in the image that belong to the preset color range is not within the preset pixel proportion range, determine the target color range from the plurality of color ranges of the image, a proportion of pixels of the target color range in the image being within the preset pixel proportion range, and a color difference between the preset color range and the target color range being less than a color difference threshold.

In some embodiments, in response to that the proportion of the pixels in the image that belong to the preset color range is not within the preset pixel proportion range (for example, is less than the minimum value of the preset pixel proportion range, or is greater than the maximum value of the preset pixel proportion range), the target color range is determined from the plurality of color ranges of the image, the proportion of the pixels of the target color range in the image being within the preset pixel proportion range, and the color difference between the preset color range and the target color range being less than the preset color difference threshold.

Still refer to FIG. 4A. Operation 203: Use a proportion of pixels in each macroblock of the image that belong to the target color range as a probability that each macroblock includes the target region of the target object.

In some embodiments, the proportion of the pixels in each macroblock that belong to the target color range is obtained as the probability that the macroblock includes the second region. For example, a proportion of pixels in a macroblock 1 that belong to the target color range is 80/100 (assuming that 100 is a quantity of pixels included in the macroblock 1). In this case, a probability that the macroblock 1 includes the second region is 0.8.

Operation 204: Separately set a QP for at least one macroblock based on the probability that each macroblock includes the target region.

In some embodiments, the following processing is performed on each macroblock: generating a QP of the macroblock based on the probability that the macroblock includes the target region (corresponding to the foregoing second region), the probability that the macroblock includes the target region being negatively correlated with the QP of the macroblock.

For example, the probability that the macroblock includes the target region of the target object is negatively correlated with the QP of the macroblock. To be specific, a higher probability value of the macroblock indicates a lower QP corresponding to the macroblock. During image encoding, an encoder may automatically change a value of the QP based on an actual status of the image. The value of the QP is not limited in this embodiment of this application.

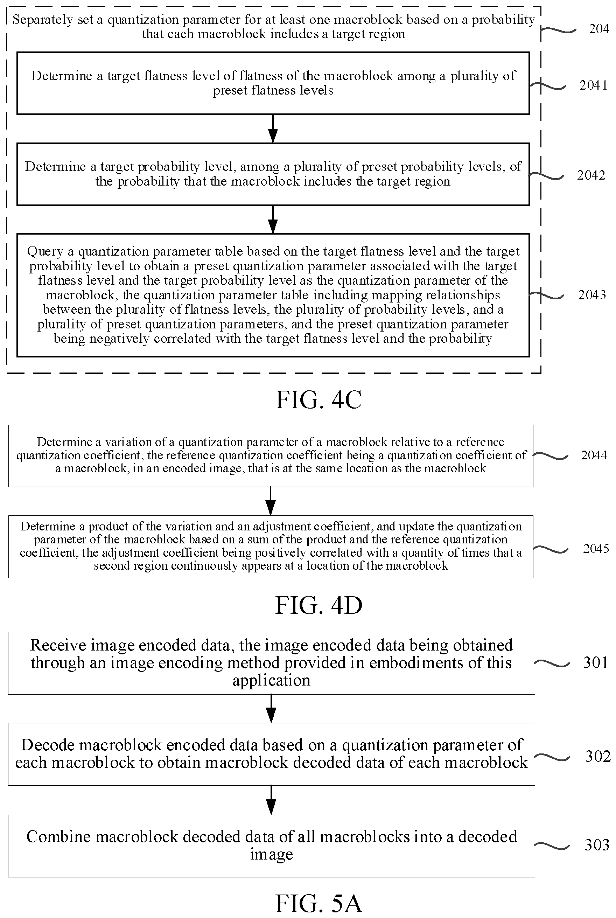

In some embodiments, as shown in FIG. 4C, the generating a QP of the macroblock based on the probability that the macroblock includes the target region may be implemented by performing the following operation 2041 to operation 2043 for each macroblock. Details are described below.

Operation 2041: Determine a target flatness level of flatness of the macroblock among a plurality of preset flatness levels.

In some embodiments, the target flatness level of the flatness of the macroblock among the plurality of preset flatness levels divided into a high level, a medium level, and a low level based on values is determined. For a specific implementation, refer to the foregoing descriptions of operation 1033. Details are not described herein again.

Operation 2042: Determine a target probability level, among a plurality of preset probability levels, of the probability that the macroblock includes the target region.

In some embodiments, the target probability level, among the plurality of preset probability levels divided into a high level, a medium level, and a low level based on values, of the probability that the macroblock includes the second region of the target object is determined. For a specific implementation, refer to the foregoing descriptions of operation 1034. Details are not described herein again.

Operation 2043: Query a QP table based on the target flatness level and the target probability level to obtain a preset QP associated with the target flatness level and the target probability level as the QP of the macroblock, the QP table including mapping relationships between the plurality of flatness levels, the plurality of probability levels, and a plurality of preset QPs, and the preset QP being negatively correlated with the target flatness level and the probability.

In some embodiments, the QP table is queried based on the target flatness level and the target probability level to obtain the preset QP associated with the target flatness level and the target probability level as the QP of the macroblock. For setting of the QP table, refer to the foregoing descriptions of Table 1. Details are not described herein again.

In some embodiments, as shown in FIG. 4D, after the QP is separately set for the at least one macroblock, the following operation 2044 to operation 2045 may be further performed for each macroblock. Details are described below.

Operation 2044: Determine a variation of the QP of the macroblock relative to a reference quantization coefficient, the reference quantization coefficient being a quantization coefficient of a macroblock, in an encoded image, that is at the same location as the macroblock.

For example, it is assumed that a QP of a macroblock 1 in a to-be-encoded image 2 is 40, a quantization coefficient of a macroblock 1 in an encoded image 1 is 20 (the reference quantization coefficient), and a variation of the QP of the macroblock 1 relative to the reference quantization coefficient is 40 - 20 =20.

Operation 2045: Determine a product of the variation and an adjustment coefficient, and update the QP of the macroblock based on a sum of the product and the reference quantization coefficient, the adjustment coefficient being positively correlated with a quantity of times that the second region continuously appears at a location of the macroblock.

In the foregoing example, it is assumed that the adjustment coefficient is 0.1, a product of the variation (20) and the adjustment coefficient is 2, and a sum of the product and the reference quantization coefficient is 20+2=22. 22 is used as an updated QP of the macroblock 1 in the to-be-encoded image 2. Herein, the adjustment coefficient is positively correlated with the quantity of times that the second region continuously appears at the location of the macroblock. To be specific, a larger quantity of times that the second region continuously appears at a location of a same macroblock in a plurality of to-be-encoded images indicates a larger value of the adjustment coefficient (for example, a highest value is 1).

Still refer to FIG. 4A. Operation 205: Encode each macroblock based on the QP of each macroblock.

For a specific implementation herein, refer to the foregoing descriptions of operation 104. Details are not described herein again.

Operation 206: Generate image encoded data of the image based on macroblock encoded data obtained through encoding.

For a specific implementation herein, refer to the foregoing descriptions of operation 105. Details are not described herein again.

The image decoding method provided in the embodiments of this application is described by using an example in which the image decoding device (the terminal device or the server) is configured to decode an image. FIG. 5A is a first schematic flowchart of an image decoding method according to an embodiment of this application. The method is described with reference to operations shown in FIG. 5A.

Operation 301: Receive image encoded data, the image encoded data being obtained through the image encoding method provided in the embodiments of this application.

In some embodiments, the image encoded data is received, the image encoded data being obtained by encoding a to-be-encoded image through operation 101 to operation 105.

Operation 302: Decode macroblock encoded data based on a QP of each macroblock to obtain macroblock decoded data of each macroblock.

In some embodiments, the image encoded data includes macroblock encoded data of each macroblock (refer to the foregoing descriptions of operation 104 to operation 105). During decoding, a decoder reads a QP in each piece of macroblock encoded data, for example, reads macroblock header information (for example, a macroblock type and the QP) included in the macroblock encoded data, and recovers pixel information of the macroblock through an inverse quantization process corresponding to the encoder. The inverse quantization is an inverse process of quantization, and recovers a raw pixel value by using the QP. Finally, the decoder recombines recovered pixel values into a macroblock, to obtain the macroblock decoded data of each macroblock.

Operation 303: Combine macroblock decoded data of all macroblocks into a decoded image.

In some embodiments, the macroblock decoded data obtained through decoding is sorted based on locations of the macroblocks in a raw image, and the sorted macroblock decoded data is spliced together based on the locations of the macroblocks, to form a complete decoded image.

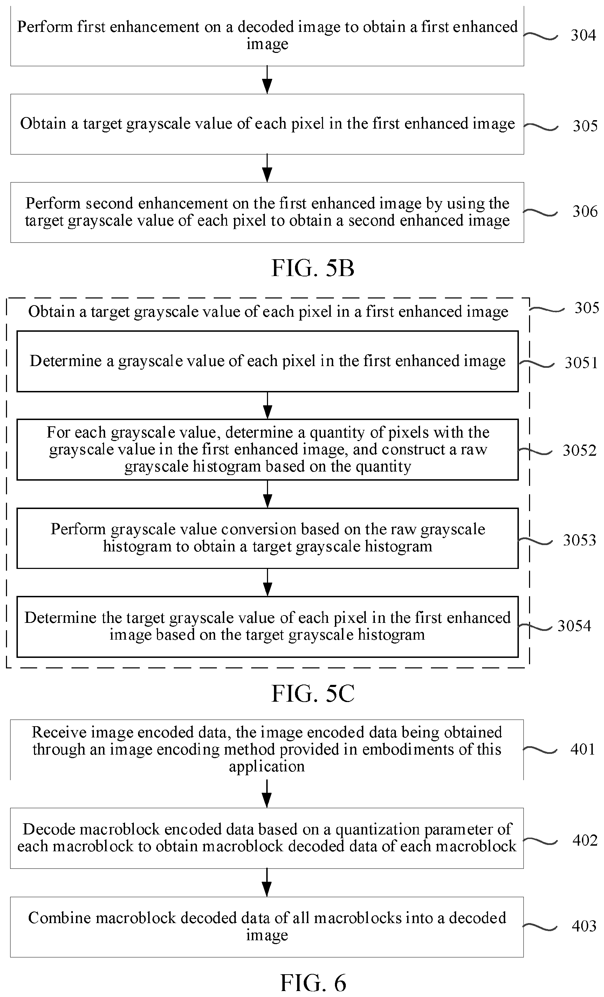

In some embodiments, as shown in FIG. 5B, after the decoded image is obtained, the following operation 304 to operation 306 may be further performed. Details are described below.

Operation 304: Perform first enhancement on the decoded image to obtain a first enhanced image.

In some embodiments, feature extraction is performed on the decoded image to obtain an image feature, and image reconstruction is performed based on the image feature to obtain the first enhanced image.

In some embodiments, the first enhancement may be performed on the decoded image through a pre-trained image super-resolution model (for example, a super-resolution convolutional neural network (SRCNN) or a super-resolution generative adversarial network (SRGAN)), to obtain the first enhanced image. The image super-resolution model is not limited in this embodiment of this application.

For example, the first enhancement is performed through the SRCNN. The first enhancement includes: first, preprocessing the decoded image, for example, upscaling the decoded image to a target size by using a bicubic interpolation algorithm; then, inputting an upscaled decoded image to a three-layer convolutional neural network, extracting an image feature through a convolutional layer, and performing non-linear mapping to fit a mapping relationship from a low resolution to a high resolution; and finally, outputting a high-resolution image result, that is, obtaining the first enhanced image.

Operation 305: Obtain a target grayscale value of each pixel in the first enhanced image.

In some embodiments, as shown in FIG. 5C, operation 305 shown in FIG. 5B may be implemented by the following operation 3051 to operation 3054. Details are described below.

Operation 3051: Determine a grayscale value of each pixel in the first enhanced image.

In some embodiments, the grayscale value of each pixel may be calculated by using a weighted averaging method. For example, weighted averaging is performed on RGB values of each pixel to obtain the grayscale value of the pixel. For example, weights of R, G, and B are 0.299, 0.587, and 0.114 respectively. Alternatively, the grayscale value of each pixel may be determined by using an averaging method. To be specific, the RGB values are added up, and then a sum is divided by 3. Alternatively, another more complex grayscale value calculation method is used. A specific grayscale value calculation method is not limited in this embodiment of this application.

Operation 3052: For each grayscale value, determine a quantity of pixels with the grayscale value in the first enhanced image, and construct a raw grayscale histogram based on the quantity.

In some embodiments, the raw grayscale histogram is constructed based on the grayscale value of each pixel in the first enhanced image.

Operation 3053: Perform grayscale value conversion based on the raw grayscale histogram to obtain a target grayscale histogram.

In some embodiments, the raw grayscale histogram may be mapped to the target grayscale histogram by using a histogram equalization algorithm. Specifically, the target grayscale histogram (also referred to as a cumulative histogram) is obtained by performing cumulative distribution function (CDF) calculation based on the raw grayscale histogram.

Operation 3054: Determine the target grayscale value of each pixel in the first enhanced image based on the target grayscale histogram.

For example, the determining the target grayscale value (also referred to as a target luminance value) may be represented as performing the following processing on each pixel: the target grayscale value=(a cumulative histogram value-a minimum cumulative histogram value)×(a maximum grayscale value-a minimum grayscale value)/(a total quantity of pixels-the minimum cumulative histogram value)+the minimum grayscale value.

The cumulative histogram value (also referred to as a target grayscale histogram value) represents a quantity of pixels whose grayscale values are less than or equal to a grayscale value of a current pixel in the first enhanced image, and indicates "popularity" or "cumulative frequency" of the grayscale value of the current pixel in the image. The minimum cumulative histogram value (which is usually 0) indicates that no grayscale value of a pixel is less than the minimum possible value. In the formula, the minimum value is subtracted to ensure that calculation starts from 0, to be specific, mapping to the target grayscale value starts from a reference point. The maximum grayscale value and the minimum grayscale value define a range of the target grayscale value. For example, in an 8-bit image, the maximum grayscale value is 255 (representing white, where a pixel has maximum luminance), and the minimum grayscale value is 0 (representing black, where a pixel has minimum luminance).

Still refer to FIG. 5B. Operation 306: Perform second enhancement on the first enhanced image by using the target grayscale value of each pixel to obtain a second enhanced image.

In some embodiments, the grayscale value of each pixel in the first enhanced image is updated to the target grayscale value corresponding to the pixel, to obtain the second enhanced image.

In some embodiments, saturation enhancement may be further performed on each pixel in a region in the second enhanced image other than the second region (for example, a color space of the second enhanced image is converted into an HSL color space, and a value of an S (saturation) channel is directly adjusted, to increase saturation), to obtain a new second enhanced image. For example, in a livestreaming scenario, pixels in the second region are deleted during saturation enhancement, to well avoid a red-toned skin color. The optimized new second enhanced image may be bright in color without appearing "unnatural".

Through operation 301 to operation 306, after the decoded image is obtained, definition of the decoded image is improved through the first enhancement (image super-resolution processing), and color enhancement of the decoded image is implemented through the second enhancement and the saturation enhancement, to alleviate color loss of the image when a bitrate is reduced.

The image decoding method provided in the embodiments of this application is described by using an example in which the image decoding device (the terminal device or the server) is configured to decode an image. FIG. 6 is a fourth schematic flowchart of an image decoding method according to an embodiment of this application. The method is described with reference to operations shown in FIG. 6.

Operation 401: Receive image encoded data, the image encoded data being obtained through the image encoding method provided in the embodiments of this application.

In some embodiments, the image encoded data is received, the image encoded data being obtained by encoding a to-be-encoded image through operation 201 to operation 206.

Operation 402: Decode macroblock encoded data based on a QP of each macroblock to obtain macroblock decoded data of each macroblock.

In some embodiments, the image encoded data includes macroblock encoded data of each macroblock (refer to the foregoing descriptions of operation 205 to operation 206). During decoding, a decoder reads a QP in each piece of macroblock encoded data, for example, reads macroblock header information (for example, a macroblock type and the QP) included in the macroblock encoded data, and recovers pixel information of the macroblock through an inverse quantization process corresponding to the encoder. The inverse quantization is an inverse process of quantization, and recovers a raw pixel value by using the QP. Finally, the decoder recombines recovered pixel values into a macroblock, to obtain the macroblock decoded data of each macroblock.

Operation 403: Combine macroblock decoded data of all macroblocks into a decoded image.

In some embodiments, the macroblock decoded data obtained through decoding is sorted based on locations of the macroblocks in a raw image, and the sorted macroblock decoded data is spliced together based on the locations of the macroblocks, to form a complete decoded image.

In some embodiments, after the decoded image is obtained, first enhancement may be further performed on the decoded image to obtain a first enhanced image (refer to the foregoing descriptions of operation 304), a target grayscale value of each pixel in the first enhanced image is obtained (refer to the foregoing descriptions of operation 305), and second enhancement is performed on the first enhanced image by using the target grayscale value of each pixel to obtain a second enhanced image (refer to the foregoing descriptions of operation 306).

The following describes a specific example in which the encoding/decoding method in the embodiments of this application is applied to a livestreaming scenario. As video livestreaming has become a streaming media service that Internet users use every day, users have increasingly high requirements on video definition. Currently, most video livestreaming platforms already start to use a video resolution of 1080p. To maintain very high definition at the high resolution of 1080p, a very high encoding bitrate is needed to match the high resolution. For example, a common livestreaming platform usually uses a video bitrate of at least 2 Mbps, and a livestreaming platform with a higher requirement on definition uses a video bitrate of 6 Mbps or even higher. However, the high bitrate imposes a very high requirement on downlink bandwidth of a user. If bandwidth is insufficient, frame freezing is quite likely to occur during watching, and huge pressure is also imposed on bandwidth costs of the livestreaming platform.

According to the image encoding method and the image decoding method provided in the embodiments of this application, a video bitrate can be reduced without reducing definition of an image. For example, in a scenario in which livestreaming content is mainly human beings, an image is centered on a "streamer", and the streamer shows commodities or performance in front of a camera, same definition can be obtained for an original 1080p and 2 Mbps live stream at an encoding bitrate of only 1 Mbps, to greatly lower a bandwidth requirement for a mobile phone of a user during live watching, and also greatly reduce bandwidth costs of a livestreaming platform. The livestreaming scenario and the livestreaming content are not limited in the embodiments of this application. For example, the embodiments of this application may alternatively be applied to game live and live sports events.

The following describes exemplary application of the embodiments of this application in a livestreaming scenario. FIG. 8 is a first schematic flowchart of application of an image encoding method and an image decoding method in a livestreaming scenario according to an embodiment of this application. The methods are described with reference to operations shown in FIG. 8.

Operation 501: A first terminal device captures video data.

In some embodiments, the first terminal device may capture an uncompressed raw video stream through a camera connected to a computer or another video input device, to capture the video data.

Operation 502: The first terminal device performs image preprocessing on the video data to obtain to-be-encoded video data.

In some embodiments, the video data includes a plurality of video frames, and the first terminal device performs image preprocessing (corresponding to the foregoing downsampling) on each video frame to obtain the to-be-encoded video data. The downsampling may reduce a resolution of each video frame by using a nearest interpolation method, a bilinear interpolation method, a bicubic interpolation method, or the like. For example, a resolution of a raw video frame is 1920×1080 (1080p), and a resolution of a downsampled video frame is 1280×720. A specific implementation of the downsampling is not limited in this embodiment of this application.

Through downsampling, for example, downsampling the resolution from 1080p to 720p, a quantity of pixels in a video frame that needs to be encoded is reduced by 65%, to save an encoding bitrate of 30% to 50% and reduce computing consumption of video encoding under a same video encoding standard.

Herein, reducing the quantity of pixels and lowering the encoding bitrate leads to a decrease in image definition, and definition loss caused by downsampling is compensated for by introducing a better encoding control technology (corresponding to operation 503 below) to an encoder on a streamer side and using an image post-processing technology (corresponding to operation 507 below) on an audience side. In this way, the image definition is only slightly lost when the resolution of the video frame is reduced, to reduce computing consumption of video encoding under a same video encoding standard.

Operation 503: The first terminal device performs video encoding on the to-be-encoded video data based on the image encoding method provided in the embodiments of this application, to obtain encoded video data.

In some embodiments, video encoding is performed on the to-be-encoded video data by using a preset encoding standard (for example, an H.264 coding standard) based on the image encoding method provided in the embodiments of this application, to obtain the encoded video data. In the image encoding method provided in the embodiments of this application, the to-be-encoded image may correspond to a key frame in the video data.

Specifically, frame types of video frames are classified into an I-frame (a key frame that is independently encoded and corresponds to the foregoing to-be-encoded image, where a long video stream may include a plurality of I-frames), a P-frame (a forward predictive frame that is encoded with reference to a previous I-frame or P-frame), and a B-frame (a bidirectional predictive frame that is encoded with reference to a previous frame and a following frame). Then each video frame is divided into a plurality of macroblocks (refer to the foregoing descriptions of FIG. 7A), and pixel value prediction is performed on all macroblocks at a same location between video frames. Specifically, an intra prediction method is used for the I-frame, that is, a current pixel value is predicted based on an encoded pixel; and the intra prediction method or an inter prediction method is used for the P-frame and the B-frame, that is, pixel values of adjacent frames are compared to reduce redundant information. Then a residual between a predicted value and a raw pixel value is calculated, and DCT and quantization are performed on the residual to further reduce a data size. Finally, entropy encoding is performed on information such as a coefficient obtained through quantization, to generate a final encoding bitrate, to obtain the encoded video data. The quantization herein is implemented based on a QP. During encoding, an encoder may perform adaptive quantization on a plurality of video frames, and automatically adjust a value of the QP based on content of a video sequence.

For example, a QP of each macroblock of the I-frame (corresponding to the foregoing to-be-encoded image) may be set in the following manner: performing at least one image detection mode on the I-frame based on priorities of a plurality of image detection modes to obtain a detection result of the I-frame. Specifically, a first detection mode is performed on the I-frame. When a first region (for example, a face of a streamer) including a target object (for example, the streamer) is detected from the I-frame, a first detection result representing that the image includes the first region is generated (refer to the foregoing descriptions of operation 1021). When the first region is not detected from the I-frame or computing resources are insufficient for performing the first detection mode, a second detection mode is performed on each macroblock in the I-frame to obtain a second detection result (refer to the foregoing descriptions of operation 1022), and a QP is separately set for at least one macroblock in the I-frame based on the detection result (refer to the foregoing descriptions of operation 103).

For example, the P-frame is configured for recording a difference between the current frame and each macroblock in a reference frame (a previous I-frame or a previous P-frame) (for example, a pixel difference and a motion vector difference between macroblocks, where the motion vector difference represents a location offset between a macroblock in the current frame and a corresponding macroblock in the reference frame). DCT and quantization are performed on the difference of each macroblock to obtain a quantized coefficient, and entropy encoding is performed on the quantized coefficient to obtain encoded data corresponding to the P-frame. The quantization herein is implemented based on a QP. During encoding, an encoder may determine a QP of each macroblock based on H.264 or another encoding standard, or may determine a QP of each macroblock through the foregoing solution of setting the QP for the I-frame. A value of the QP corresponding to each macroblock may be dynamically adjusted.

For example, the B-frame is configured for recording a difference between the current frame and each macroblock in a previous or following reference frame (a previous I-frame or P-frame and a following P-frame) (for example, a pixel difference and a motion vector difference between macroblocks, where the motion vector difference represents a location offset between a macroblock in the current frame and a corresponding macroblock in the previous or following reference frame). DCT and quantization are performed on the difference of each macroblock to obtain a quantized coefficient, and entropy encoding is performed on the quantized coefficient to obtain encoded data corresponding to the B-frame. The quantization herein is implemented based on a QP. During encoding, an encoder may determine a QP of each macroblock based on H.264 or another encoding standard, or may determine a QP of each macroblock through the foregoing solution of setting the QP for the I-frame. A value of the QP corresponding to each macroblock may be dynamically adjusted.

For example, the performing a second detection mode on each macroblock in the I-frame to obtain a second detection result may be implemented in the following manner: determining a target color range corresponding to a second region of the target object (for example, a skin region of the streamer) based on proportions of pixels of a plurality of color ranges in the I-frame (refer to the foregoing descriptions of operation 10221); using a proportion of pixels in each macroblock that belong to the target color range as a probability that the macroblock includes the second region (refer to the foregoing descriptions of operation 10222); and generating the second detection result based on the probability that each macroblock includes the second region (refer to the foregoing descriptions of operation 10223).

For example, when the detection result is the first detection result and the first detection result represents that the I-frame includes the first region of the target object, the separately setting a QP for at least one macroblock in the I-frame based on the detection result may be implemented in the following manner: determining a macroblock that overlaps the first region (refer to the foregoing descriptions of operation 1031); and setting a first QP for the macroblock that overlaps the first region, and setting a second QP for a macroblock that does not overlap the first region, the first QP being less than the second QP (refer to the foregoing descriptions of operation 1032).

For example, when the detection result is the second detection result and the second detection result represents flatness of each macroblock and the probability that the macroblock includes the second region of the target object, the separately setting a QP for at least one macroblock in the I-frame based on the detection result may be implemented in the following manner: determining a target flatness level of the flatness of the macroblock among a plurality of preset flatness levels (refer to the foregoing descriptions of operation 1033); determining a target probability level, among a plurality of preset probability levels, of the probability that the macroblock includes the second region (refer to the foregoing descriptions of operation 1034); and querying a QP table based on the target flatness level and the target probability level to obtain a preset QP associated with the target flatness level and the target probability level as the QP of the macroblock, the QP table including mapping relationships between the plurality of flatness levels, the plurality of probability levels, and a plurality of preset QPs, and the preset QP being negatively correlated with the target flatness level and the probability level (refer to the foregoing descriptions of operation 1035).

In some embodiments, after the QP is set for the at least one macroblock in the I-frame based on the detection result, the following processing may be further performed for each macroblock: determining a variation of the QP of the macroblock relative to a reference quantization coefficient, the reference quantization coefficient being a quantization coefficient of a macroblock, in an encoded video frame (corresponding to the foregoing image), that is at the same location as the macroblock (refer to the foregoing descriptions of operation 1036); and determining a product of the variation and an adjustment coefficient, and updating the QP of the macroblock based on a sum of the product and the reference quantization coefficient, the adjustment coefficient being positively correlated with a quantity of times that the second region continuously appears at a location of the macroblock (refer to the foregoing descriptions of operation 1037).

Operation 504: The first terminal device transmits the encoded video data to a second terminal device.

In some embodiments, the first terminal device encapsulates the encoded video data according to a specific protocol (for example, the real-time messaging protocol (RTMP)), to transmit the encoded video data in a network. Then the first terminal device transmits encapsulated encoded video data to the second terminal device.

Operation 505: The second terminal device receives the encoded video data.

In some embodiments, the second terminal device receives the encoded video data through the network, and stores the encoded video data in a buffer.

Operation 506: The second terminal device performs video decoding on the encoded video data based on the image decoding method provided in the embodiments of this application, to obtain decoded video data.

In some embodiments, the decoded video data may include a plurality of decoded video frames. The video encoded data includes macroblock encoded data of each macroblock in each video frame (refer to the descriptions of operation 104). During decoding, a decoder reads a QP in each piece of macroblock encoded data, for example, reads macroblock header information (for example, a macroblock type and the QP) included in the macroblock encoded data, and recovers pixel information of the macroblock through an inverse quantization process corresponding to the encoder. The inverse quantization is an inverse process of quantization, and recovers a raw pixel value by using the QP. Finally, the decoder recombines recovered pixel values into a macroblock, to obtain macroblock decoded data of each macroblock and combine macroblock decoded data of all macroblocks into a decoded video frame.

For example, the I-frame may be independently decoded without depending on another frame. To be specific, the decoder reads a QP in each piece of macroblock encoded data corresponding to the I-frame, for example, reads macroblock header information (for example, a macroblock type and the QP) included in the macroblock encoded data, and recovers pixel information of the macroblock through an inverse quantization process corresponding to the encoder. The inverse quantization is an inverse process of quantization, and recovers a raw pixel value by using the QP. Finally, the decoder recombines recovered pixel values into a macroblock, to obtain macroblock decoded data of each macroblock and combine macroblock decoded data of all macroblocks into a complete I-frame.

For example, the P-frame may be decoded by performing the following processing on each macroblock: extracting a motion vector difference of a corresponding macroblock from encoded data of the P-frame, the motion vector difference indicating a location offset between the current macroblock and a corresponding macroblock in a reference frame (a previous I-frame or P-frame); finding, by the decoder, corresponding macroblock data from the reference frame based on the motion vector difference, performing prediction on a macroblock of the current P-frame by using the macroblock data in the reference frame, extracting prediction error data (corresponding to a pixel difference) from the encoded data of the P-frame, and adding the prediction error data to the predicted macroblock (to be specific, performing summation on a pixel difference of a macroblock in the P-frame and a macroblock at a corresponding location in the reference frame), to reconstruct the current macroblock in the P-frame; repeating the foregoing operations until all macroblocks are processed; and then combining all reconstructed macroblocks into a complete P-frame.

For example, the B-frame may be decoded by performing the following processing on each macroblock: extracting a forward motion vector difference and a backward motion vector difference of a corresponding macroblock from encoded data of the B-frame, the motion vector difference indicating a location offset between the current macroblock and a corresponding macroblock in a reference frame (a previous I-frame or P-frame and a following P-frame); finding, by the decoder, corresponding macroblock data from the previous I-frame or P-frame and the following P-frame based on the forward motion vector difference and the backward motion vector difference respectively, performing bidirectional prediction on a macroblock of the current B-frame by using the macroblock data in the reference frame, extracting prediction error data (corresponding to a pixel difference) from the encoded data of the B-frame, and adding the prediction error data to the macroblock of the B frame, to reconstruct the current macroblock in the B-frame; repeating the foregoing operations until all macroblocks are processed; and then combining all reconstructed macroblocks into a complete B-frame.

Operation 507: The second terminal device performs image post-processing on the decoded video data to obtain to-be-displayed video data.

In some embodiments, the following processing is performed on each decoded video frame in the decoded video data: performing first enhancement on the decoded video frame to obtain a first enhanced video frame (refer to the foregoing descriptions of operation 304); obtaining a target grayscale value of each pixel in the first enhanced video frame (refer to the foregoing descriptions of operation 305); and performing second enhancement on the first enhanced video frame by using the target grayscale value of each pixel to obtain a second enhanced video frame (refer to the foregoing descriptions of operation 306), and sequentially combining second enhanced video frames of all decoded video frames into the to-be-displayed video data.

In some embodiments, saturation enhancement may be further performed on each pixel in a region in the second enhanced video frame other than the second region (for example, a color space of the second enhanced video frame is converted into an HSL color space, and a value of an S (saturation) channel is directly adjusted, to increase saturation), to obtain a new second enhanced video frame. Pixels in the second region are deleted during saturation enhancement, to well avoid a red-toned skin color. The optimized new second enhanced video frame may be bright in color without appearing "unnatural".

In some other embodiments, after capturing video data (corresponding to the foregoing operation 501), a first terminal device (a streamer side) may further perform the following processing: in response to that device performance of the first terminal device reaches a preset performance threshold, performing second enhancement on each video frame in the video data; performing, by the first terminal device, image preprocessing on video data obtained through second enhancement, to obtain to-be-encoded video data (corresponding to the foregoing operation 502); encoding, by the first terminal device, the to-be-encoded video data to obtain video encoded data, and transmitting the video encoded data to a second terminal device (an audience side), the video encoded data including a processing tag, and the processing tag being configured for representing that the first terminal device has performed second enhancement on the video data and the second terminal device only needs to perform first enhancement; performing, by the second terminal device, decoding after receiving the video encoded data carrying the processing tag, to obtain decoded video data; and performing, by the second terminal device, the first enhancement on the decoded video data based on the processing tag to obtain to-be-displayed video data.

For example, when the device performance on the streamer side reaches the preset performance threshold (for example, a screen resolution, a refresh rate, or a processor model of the device reaches a corresponding threshold), color enhancement (the second enhancement) is enabled on the streamer side, video encoding is performed on enhanced video data, and a processing tag, for example, supplemental enhancement information (SEI), is added to an encoded video frame. The tag means that "the streamer side has performed the second enhancement, and the audience side only needs to perform the first enhancement". When receiving the video encoded data and performing decoding, the audience side reads the processing tag, and only needs to perform the first enhancement instead of the second enhancement, to obtain the to-be-displayed video data.

For example, if the device performance on the streamer side does not reach the preset performance threshold, the following processing tag may be further added to a to-be-encoded video frame: "First enhancement needs to be performed on the audience side, and second enhancement is to be performed when rendering performance of the device on the audience side reaches a preset rendering performance threshold." In this case, the audience side selectively performs the second enhancement based on the rendering performance. For example, when a rendering frame rate of the audience side reaches the preset rendering performance threshold (for example, 30 frames/second), the second enhancement is enabled; or if it is detected that the rendering frame rate is insufficient, the second enhancement is disabled.

For example, FIG. 9 is a second schematic flowchart of application of an image encoding method and an image decoding method in a livestreaming scenario according to an embodiment of this application. After capturing a video (corresponding to the foregoing operation 501), a streamer side (corresponding to a first terminal device) processes the video through an image preprocessing module (corresponding to the foregoing operation 502), performs video encoding (corresponding to the foregoing operation 503) on a preprocessed video to obtain video encoded data, transmits the video encoded data to a background server of a livestreaming platform or a video cloud through a network, transmits the video encoded data to a plurality of audience sides (corresponding to second terminal devices) through the background server of the livestreaming platform or the video cloud. After receiving the video encoded data, the audience side performs video buffering, that is, caches the video encoded data in a buffer (corresponding to the foregoing operation 505); then performs video decoding on the video encoded data to obtain decoded video data (corresponding to the foregoing operation 506); finally performs post-processing on the decoded video data through an image post-processing module to obtain to-be-displayed video data (corresponding to the foregoing operation 507); and displays the to-be-displayed video data to the audience side through video rendering.

Through operation 501 to operation 507, "video encoding" on the streamer side is optimized, downsampling (image preprocessing) is performed to improve encoding efficiency of an encoder after an encoding bitrate is reduced, and appropriateness of QP setting by the encoder is improved based on the image encoding method provided in the embodiments of this application. "Image post-processing" is added to the audience side. Definition is improved through the first enhancement (image super-resolution processing), and a color of a video frame is enhanced through the second enhancement and the saturation enhancement, to alleviate color loss of a video image after a bitrate is reduced. To sum up, effect of "1+1>2" is achieved based on improvement of an encoding technology on the streamer side and an image enhancement technology on the audience side. For example, same definition can be obtained for an original 1080p and 2 Mbps live stream at an encoding bitrate of only 1 Mbps, to save the video bitrate by approximately 50%.

The following further describes an exemplary structure of the first image encoding apparatus 433 provided in the embodiments of this application when the apparatus is implemented as software modules. In some embodiments, as shown in FIG. 2A, software modules of the first image encoding apparatus 433 stored in the memory 430 may include:
a first data obtaining module 4331, configured to obtain a to-be-encoded image; and
a first encoding module 4332, configured to perform at least one image detection mode on the image based on priorities of a plurality of image detection modes to obtain a detection result of the image.

In some embodiments, the first encoding module 4332 is further configured to separately set a QP for at least one macroblock in the image based on the detection result.

In some embodiments, the first encoding module 4332 is further configured to encode each macroblock based on a QP of each macroblock.

In some embodiments, the first encoding module 4332 is further configured to generate image encoded data of the image based on macroblock encoded data obtained through encoding.

In some embodiments, the plurality of image detection modes include a first detection mode and a second detection mode, and a priority of the first detection mode is higher than a priority of the second detection mode; and the first encoding module 4332 is further configured to: perform the first detection mode on the image, and when a first region including a target object is detected from the image, generate a first detection result representing that the image includes the first region; or when the first region is not detected from the image or computing resources are insufficient for performing the first detection mode, perform the second detection mode on each macroblock in the image to obtain a second detection result.

In some embodiments, the first encoding module 4332 is further configured to: determine, based on proportions of pixels of a plurality of color ranges in the image, a target color range corresponding to a second region of the target object; use a proportion of pixels in each macroblock that belong to the target color range as a probability that the macroblock includes the second region; and generate the second detection result based on the probability that each macroblock includes the second region.

In some embodiments, the first encoding module 4332 is further configured to: in response to that a proportion of pixels in the image that belong to a preset color range is within a preset pixel proportion range, use the preset color range as the target color range to which pixels in the second region of the target object belong; or in response to that the proportion of the pixels in the image that belong to the preset color range is not within the preset pixel proportion range, determine the target color range from the plurality of color ranges of the image, a proportion of pixels of the target color range in the image being within the preset pixel proportion range, and a color difference between the preset color range and the target color range being less than a color difference threshold.

In some embodiments, the first encoding module 4332 is further configured to update the preset color range to the target color range, the updated preset color range being configured for performing the second detection mode on a new to-be-encoded image.

In some embodiments, the first encoding module 4332 is further configured to: for the plurality of color ranges, determine a quantity of pixels in the image that belong to each color range, the plurality of color ranges being obtained by dividing a color space; and for each color range, use a ratio of a quantity of pixels in the image that belong to the color range to a total quantity of pixels in the image as a proportion of the pixels of the color range in the image.

In some embodiments, the first encoding module 4332 is further configured as follows: When the target object is a living creature imaged in the image, the first region is a face region of the living creature, and the second region is a skin region of the living creature; or when the target object is an object imaged in the image, the first region is a main region of the object, and the second region is a local region of the object.

In some embodiments, the first encoding module 4332 is further configured to: collect statistics on flatness of each macroblock in the image; collect statistics on a proportion of pixels in each macroblock of the image that belong to the target color range, and use the proportion as a probability that the macroblock includes the second region of the target object, the target color range being a color value range of the second region of the target object; and generate the second detection result based on the flatness and the probability of each macroblock.

In some embodiments, the first encoding module 4332 is further configured to collect statistics on flatness of each macroblock in the image, and generate the second detection result based on the flatness of each macroblock.

In some embodiments, the first encoding module 4332 is further configured to perform the following processing on each macroblock: performing grayscale processing on the macroblock to obtain a grayscale value of each pixel in the macroblock; determining an average grayscale value of the macroblock based on the grayscale value of each pixel; and determining a grayscale variance of the macroblock as the flatness of the macroblock based on the average grayscale value.

In some embodiments, the first encoding module 4332 is further configured to: invoke a pre-trained detection model to perform key point detection on the image to obtain a key point detection result, the key point detection result including a bounding box and a key point; and in response to that a quantity of key points is a preset quantity of key points, use a region corresponding to the bounding box as the first region of the target object, and generate the first detection result representing that the image includes the first region, the preset quantity of key points being configured for determining a minimum quantity of first regions included in the image.

In some embodiments, when the detection result is the first detection result and the first detection result represents that the image includes the first region of the target object, the first encoding module 4332 is further configured to: determine a macroblock that at least partially overlaps the first region; and set a first QP for a macroblock that overlaps the first region, and set a second QP for a macroblock that does not overlap the first region, the first QP being less than the second QP.

In some embodiments, when the detection result is the second detection result and the second detection result represents the flatness of each macroblock and the probability that the macroblock includes the second region of the target object, the first encoding module 4332 is further configured to perform the following processing on each macroblock: determining a target flatness level of the flatness of the macroblock among a plurality of preset flatness levels; determining a target probability level, among a plurality of preset probability levels, of the probability that the macroblock includes the second region; and querying a QP table based on the target flatness level and the target probability level to obtain a preset QP associated with the target flatness level and the target probability level as the QP of the macroblock, the QP table including mapping relationships between the plurality of flatness levels, the plurality of probability levels, and a plurality of preset QPs, and the preset QP being negatively correlated with the target flatness level and the probability level.

In some embodiments, when the detection result is the second detection result and the second detection result represents the probability that each macroblock includes the second region of the target object, the first encoding module 4332 is further configured to perform the following processing on each macroblock: generating a QP of the macroblock based on the probability that the macroblock includes the second region of the target object, the probability that the macroblock includes the second region being negatively correlated with the QP of the macroblock.

In some embodiments, the first encoding module 4332 is further configured to perform the following processing on each macroblock: determining a variation of the QP of the macroblock relative to a reference quantization coefficient, the reference quantization coefficient being a quantization coefficient of a macroblock, in an encoded image, that is at the same location as the macroblock; and determining a product of the variation and an adjustment coefficient, and updating the QP of the macroblock based on a sum of the product and the reference quantization coefficient, the adjustment coefficient being positively correlated with a quantity of times that the second region continuously appears at a location of the macroblock.

In some embodiments, when the detection result is the second detection result and the second detection result represents the flatness of each macroblock, the first encoding module 4332 is further configured to perform the following processing on each macroblock: generating a QP of the macroblock based on the flatness of the macroblock, the flatness of the macroblock being negatively correlated with the QP of the macroblock.

In some embodiments, the first data obtaining module 4331 is further configured to: obtain an uncompressed raw image; and use the raw image as the to-be-encoded image, or downsample the raw image and use an obtained downsampled image as the to-be-encoded image.

The following further describes an exemplary structure of the second image encoding apparatus 533 provided in the embodiments of this application when the apparatus is implemented as software modules. In some embodiments, as shown in FIG. 2B, software modules of the second image encoding apparatus 533 stored in the memory 530 may include:
a second data obtaining module 5331, configured to obtain a to-be-encoded image; and
a second encoding module 5332, configured to determine, based on proportions of pixels of a plurality of color ranges in the image, a target color range corresponding to a target region of a target object.

In some embodiments, the second encoding module 5332 is further configured to use a proportion of pixels in each macroblock of the image that belong to the target color range as a probability that each macroblock includes the target region of the target object.

In some embodiments, the second encoding module 5332 is further configured to separately set a QP for at least one macroblock based on the probability that each macroblock includes the target region.

In some embodiments, the second encoding module 5332 is further configured to encode each macroblock based on the QP of each macroblock.

In some embodiments, the second encoding module 5332 is further configured to generate image encoded data of the image based on macroblock encoded data obtained through encoding.

In some embodiments, the second encoding module 5332 is further configured to: in response to that a proportion of pixels in the image that belong to a preset color range is within a preset pixel proportion range, use the preset color range as the target color range to which the target region of the target object belongs in the image; or in response to that the proportion of the pixels in the image that belong to the preset color range is not within the preset pixel proportion range, determine the target color range from the plurality of color ranges of the image, a proportion of pixels of the target color range in the image being within the preset pixel proportion range, and a color difference between the preset color range and the target color range being less than a color difference threshold.

In some embodiments, the second encoding module 5332 is further configured to perform the following processing on each macroblock: generating a QP of the macroblock based on the probability that the macroblock includes the target region, the probability that the macroblock includes the target region being negatively correlated with the QP of the macroblock.

In some embodiments, the second encoding module 5332 is further configured to perform the following processing on each macroblock: determining a target flatness level of flatness of the macroblock among a plurality of preset flatness levels; determining a target probability level, among a plurality of preset probability levels, of the probability that the macroblock includes the target region; and querying a QP table based on the target flatness level and the target probability level to obtain a preset QP associated with the target flatness level and the target probability level as the QP of the macroblock, the QP table including mapping relationships between the plurality of flatness levels, the plurality of probability levels, and a plurality of preset QPs, and the preset QP being negatively correlated with the target flatness level and the probability.

In some embodiments, the second encoding module 5332 is further configured to perform the following processing on each macroblock: determining a variation of the QP of the macroblock relative to a reference quantization coefficient, the reference quantization coefficient being a quantization coefficient of a macroblock, in an encoded image, that is at the same location as the macroblock; and determining a product of the variation and an adjustment coefficient, and updating the QP of the macroblock based on a sum of the product and the reference quantization coefficient, the adjustment coefficient being positively correlated with a quantity of times that the second region continuously appears at a location of the macroblock.

The following further describes an exemplary structure of the first image decoding apparatus 633 provided in the embodiments of this application when the apparatus is implemented as software modules. In some embodiments, as shown in FIG. 2C, software modules of the first image decoding apparatus 633 stored in the memory 630 may include:
a first data obtaining module 6331, configured to receive image encoded data, the image encoded data being obtained through the image encoding method provided in the embodiments of this application; and
a first decoding module 6332, configured to decode macroblock encoded data based on a QP of each macroblock to obtain macroblock decoded data of each macroblock.

In some embodiments, the first decoding module 6332 is further configured to combine macroblock decoded data of all macroblocks into a decoded image.

In some embodiments, the first decoding module 6332 is further configured to: perform first enhancement on the decoded image to obtain a first enhanced image; obtain a target grayscale value of each pixel in the first enhanced image; and perform second enhancement on the first enhanced image by using the target grayscale value of each pixel to obtain a second enhanced image.

In some embodiments, the first decoding module 6332 is further configured to: determine a grayscale value of each pixel in the first enhanced image; for each grayscale value, determine a quantity of pixels with the grayscale value in the first enhanced image, and construct a raw grayscale histogram based on the quantity; perform grayscale value conversion based on the raw grayscale histogram to obtain a target grayscale histogram; and determine the target grayscale value of each pixel in the first enhanced image based on the target grayscale histogram.

In some embodiments, the first decoding module 6332 is further configured to update the grayscale value of each pixel in the first enhanced image to the target grayscale value corresponding to the pixel, to obtain the second enhanced image.

In some embodiments, the first decoding module 6332 is further configured to: perform feature extraction on the decoded image to obtain an image feature; and perform image reconstruction based on the image feature to obtain the first enhanced image.

The following further describes an exemplary structure of the second image decoding apparatus 733 provided in the embodiments of this application when the apparatus is implemented as software modules. In some embodiments, as shown in FIG. 2D, software modules of the second image decoding apparatus 733 stored in the memory 730 may include:
a second data obtaining module 7331, configured to receive image encoded data, the image encoded data being obtained through the image encoding method provided in the embodiments of this application; and
a second decoding module 7332, configured to decode macroblock encoded data based on a QP of each macroblock to obtain macroblock decoded data of each macroblock.

In some embodiments, the second decoding module 7332 is further configured to combine macroblock decoded data of all macroblocks into a decoded image.

The embodiments of this application provide a computer program product. The computer program product includes a computer program or computer-executable instructions. The computer program or the computer-executable instructions are stored in a computer-readable storage medium. A processor of an electronic device reads the computer-executable instructions from the computer-readable storage medium, and the processor executes the computer-executable instructions, to enable the electronic device to perform the image encoding method and the image decoding method in the embodiments of this application.

The embodiments of this application provide a computer-readable storage medium, having computer-executable instructions or a computer program stored therein. When the computer-executable instructions or the computer program is executed by a processor, the processor is enabled to perform the image encoding method and the image decoding method provided in the embodiments of this application, for example, the image encoding method shown in FIG. 3A, the image encoding method shown in FIG. 4A, the image decoding method shown in FIG. 5A, and the image decoding method shown in FIG. 6.

In some embodiments, the computer-readable storage medium may be a memory such as a RAM, a ROM, a flash memory, a magnetic surface memory, an optical disc, or a compact disc read-only memory (CD-ROM); or may be various devices including one or any combination of the foregoing memories.

In some embodiments, the computer-executable instructions may be written in a form of a program, software, a software module, a script, or code and according to a programming language (including a compiler or interpreter language or a declarative or procedural language) in any form, and may be deployed in any form, including an independent program or a module, a component, a subroutine, or another unit suitable for use in a computing environment.

In an example, the computer-executable instructions may, but not necessarily, correspond to a file in a file system, and may be stored as a part of a file that stores other programs or data, for example, stored in one or more scripts of a Hypertext Markup Language (HTML) document, stored in a single file dedicated to the discussed program, or stored in a plurality of co-files (for example, files that store one or more modules, subroutines, or code parts).

In an example, the computer-executable instructions may be deployed on one electronic device for execution, or may be executed on a plurality of electronic devices at one location, or may be executed on a plurality of electronic devices that are distributed at a plurality of locations and that are interconnected through a communication network.

The embodiments of this application provide a video bitstream storage method, configured for performing the image encoding method provided in the embodiments of this application to generate a video bitstream; and storing the video bitstream.

The embodiments of this application provide a video bitstream transmission method, configured for performing the image encoding method provided in the embodiments of this application to generate a video bitstream; and transmitting the video bitstream.

The embodiments of this application provide a computer-readable storage medium, having a computer program/instructions and a video bitstream stored therein, the computer program/instructions, when executed by a processor, implementing the operations of the image encoding method provided in the embodiments of this application to generate the video bitstream.

Some implementations may relate to a system, a method, and/or a computer-readable medium at any possible level of integrating technical details. The computer-readable medium may include a computer-readable non-transient storage medium (or a plurality of media). The computer-readable non-transient storage medium includes computer-readable program instructions for enabling a processor to perform an operation, or may store a video bitstream generated according to the foregoing image encoding method. When the computer program/instructions are executed by the processor, the operations of the image encoding method may be implemented to generate the video bitstream, or the operations of the image decoding method may be implemented to decode the video bitstream.

To sum up, according to the embodiments of this application, detection is performed on an image based on priorities of a plurality of image detection modes, and a more appropriate QP is set for a macroblock in the image based on a detection result of at least one image detection mode. In comparison with a computing solution in the related art in which a single QP is used, more diverse image detection modes are used, and performing detection based on priorities can ensure that a more appropriate QP is set for each macroblock preferentially based on a detection result of a more appropriate detection mode, to implement finer-grained encoding control and obtain a higher-quality image at a limited bitrate.

The foregoing descriptions are merely embodiments of this application and are not intended to limit the protection scope of this application. Any modification, equivalent replacement, or improvement made without departing from the spirit and scope of this application fall within the protection scope of this application.

## Claims

1. An image encoding method, applied to an electronic device, the method comprising:
obtaining a to-be-encoded image;
performing at least one image detection mode on the image based on priorities of a plurality of image detection modes to obtain a detection result of the image;
separately setting a quantization parameter for at least one macroblock in the image based on the detection result;
encoding each macroblock based on a quantization parameter of each macroblock; and
generating image encoded data of the image based on macroblock encoded data obtained through encoding.

2. The method according to claim 1, wherein the plurality of image detection modes comprise a first detection mode and a second detection mode, and a priority of the first detection mode is higher than a priority of the second detection mode; and
the performing at least one image detection mode on the image based on priorities of a plurality of image detection modes to obtain a detection result of the image comprises:
performing the first detection mode on the image, and when a first region comprising a target object is detected from the image, generating a first detection result representing that the image comprises the first region; or
when the first region is not detected from the image or computing resources are insufficient for performing the first detection mode, performing the second detection mode on each macroblock in the image to obtain a second detection result.

3. The method according to claim 1 or 2, wherein the performing the second detection mode on each macroblock in the image to obtain a second detection result comprises:
determining, based on proportions of pixels of a plurality of color ranges in the image, a target color range corresponding to a second region of the target object;
using a proportion of pixels in each macroblock that belong to the target color range as a probability that the macroblock comprises the second region; and
generating the second detection result based on the probability that each macroblock comprises the second region.

4. The method according to any one of claims 1 to 3, wherein the determining, based on proportions of pixels of a plurality of color ranges in the image, a target color range corresponding to a second region of the target object comprises:
in response to that a proportion of pixels in the image that belong to a preset color range is within a preset pixel proportion range, using the preset color range as the target color range to which pixels in the second region of the target object belong; or
in response to that the proportion of the pixels in the image that belong to the preset color range is not within the preset pixel proportion range, determining the target color range from the plurality of color ranges of the image, a proportion of pixels of the target color range in the image being within the preset pixel proportion range, and a color difference between the preset color range and the target color range being less than a color difference threshold.

5. The method according to any one of claims 1 to 4, wherein after the determining the target color range from the plurality of color ranges of the image, the method further comprises:
updating the preset color range to the target color range, the updated preset color range being configured for performing the second detection mode on a new to-be-encoded image.

6. The method according to any one of claims 1 to 5, wherein before the performing the second detection mode on each macroblock in the image to obtain a second detection result, the method further comprises:
for the plurality of color ranges, determining a quantity of pixels in the image that belong to each color range, the plurality of color ranges being obtained by dividing a color space; and
for each color range, using a ratio of a quantity of pixels in the image that belong to the color range to a total quantity of pixels in the image as a proportion of the pixels of the color range in the image.

7. The method according to any one of claims 1 to 6, wherein
when the target object is a living creature imaged in the image, the first region is a face region of the living creature, and the second region is a skin region of the living creature; or
when the target object is an object imaged in the image, the first region is a main region of the object, and the second region is a local region of the object.

8. The method according to any one of claims 1 to 7, wherein the performing the second detection mode on each macroblock in the image to obtain a second detection result comprises:
collecting statistics on flatness of each macroblock in the image;
collecting statistics on a proportion of pixels in each macroblock of the image that belong to the target color range, and using the proportion as a probability that the macroblock comprises the second region of the target object, the target color range being a color value range of the second region of the target object; and
generating the second detection result based on the flatness and the probability of each macroblock.

9. The method according to any one of claims 1 to 8, wherein the plurality of image detection modes comprise a first detection mode and a second detection mode, a priority of the first detection mode is higher than a priority of the second detection mode, and the performing the second detection mode on each macroblock in the image to obtain a second detection result comprises:
collecting statistics on flatness of each macroblock in the image, and generating the second detection result based on the flatness of each macroblock.

10. The method according to any one of claims 1 to 9, wherein the collecting statistics on flatness of each macroblock in the image comprises:
performing the following processing on each macroblock:
performing grayscale processing on the macroblock to obtain a grayscale value of each pixel in the macroblock;
determining an average grayscale value of the macroblock based on the grayscale value of each pixel; and
determining a grayscale variance of the macroblock as the flatness of the macroblock based on the average grayscale value.

11. The method according to any one of claims 1 to 10, wherein the performing the first detection mode on the image comprises:
invoking a pre-trained detection model to perform key point detection on the image to obtain a key point detection result, the key point detection result comprising a bounding box and a key point; and
in response to that a quantity of key points is a preset quantity of key points, using a region corresponding to the bounding box as the first region of the target object, and generating the first detection result representing that the image comprises the first region, the preset quantity of key points being configured for determining a minimum quantity of first regions comprised in the image.

12. The method according to any one of claims 1 to 11, wherein when the detection result is the first detection result and the first detection result represents that the image comprises the first region of the target object, the separately setting a quantization parameter for at least one macroblock in the image based on the detection result comprises:
determining a macroblock that at least partially overlaps the first region; and
setting a first quantization parameter for a macroblock that overlaps the first region, and setting a second quantization parameter for a macroblock that does not overlap the first region, the first quantization parameter being less than the second quantization parameter.

13. The method according to any one of claims 1 to 12, wherein when the detection result is the second detection result and the second detection result represents the flatness of each macroblock and the probability that the macroblock comprises the second region of the target object, the separately setting a quantization parameter for at least one macroblock in the image based on the detection result comprises:
performing the following processing on each macroblock:
determining a target flatness level of the flatness of the macroblock among a plurality of preset flatness levels;
determining a target probability level, among a plurality of preset probability levels, of the probability that the macroblock comprises the second region; and
querying a quantization parameter table based on the target flatness level and the target probability level to obtain a preset quantization parameter associated with the target flatness level and the target probability level as the quantization parameter of the macroblock, the quantization parameter table comprising mapping relationships between the plurality of flatness levels, the plurality of probability levels, and a plurality of preset quantization parameters, and the preset quantization parameter being negatively correlated with the target flatness level and the probability level.

14. The method according to any one of claims 1 to 13, wherein when the detection result is the second detection result and the second detection result represents the probability that each macroblock comprises the second region of the target object, the separately setting a quantization parameter for at least one macroblock in the image based on the detection result comprises:
performing the following processing on each macroblock:
generating a quantization parameter of the macroblock based on the probability that the macroblock comprises the second region of the target object, the probability that the macroblock comprises the second region being negatively correlated with the quantization parameter of the macroblock.

15. The method according to any one of claims 1 to 14, wherein when the detection result is the second detection result and the second detection result represents the flatness of each macroblock, the separately setting a quantization parameter for at least one macroblock in the image based on the detection result comprises:
performing the following processing on each macroblock:
generating a quantization parameter of the macroblock based on the flatness of the macroblock, the flatness of the macroblock being negatively correlated with the quantization parameter of the macroblock.

16. The method according to any one of claims 1 to 15, wherein after the separately setting a quantization parameter for at least one macroblock in the image based on the detection result, the method further comprises:
performing the following processing on each macroblock:
determining a variation of the quantization parameter of the macroblock relative to a reference quantization coefficient, the reference quantization coefficient being a quantization coefficient of a macroblock, in an encoded image, that is at the same location as the macroblock; and
determining a product of the variation and an adjustment coefficient, and updating the quantization parameter of the macroblock based on a sum of the product and the reference quantization coefficient, the adjustment coefficient being positively correlated with a quantity of times that the second region continuously appears at a location of the macroblock.

17. The method according to any one of claims 1 to 16, wherein the obtaining a to-be-encoded image comprises:
obtaining an uncompressed raw image; and
using the raw image as the to-be-encoded image, or downsampling the raw image and using an obtained downsampled image as the to-be-encoded image.

18. An image encoding method, applied to an electronic device, the method comprising:
obtaining a to-be-encoded image;
determining, based on proportions of pixels of a plurality of color ranges in the image, a target color range corresponding to a target region of a target object;
using a proportion of pixels in each macroblock of the image that belong to the target color range as a probability that each macroblock comprises the target region of the target object;
separately setting a quantization parameter for at least one macroblock based on the probability that each macroblock comprises the target region;
encoding each macroblock based on a quantization parameter of each macroblock; and
generating image encoded data of the image based on macroblock encoded data obtained through encoding.

19. The method according to claim 18, wherein the determining, based on proportions of pixels of a plurality of color ranges in the image, a target color range corresponding to a target region of a target object comprises:
in response to that a proportion of pixels in the image that belong to a preset color range is within a preset pixel proportion range, using the preset color range as the target color range to which the target region of the target object belongs in the image; or
in response to that the proportion of the pixels in the image that belong to the preset color range is not within the preset pixel proportion range, determining the target color range from the plurality of color ranges of the image, a proportion of pixels of the target color range in the image being within the preset pixel proportion range, and a color difference between the preset color range and the target color range being less than a color difference threshold.

20. The method according to any one of claims 18 to 19, wherein the separately setting a quantization parameter for at least one macroblock based on the probability that each macroblock comprises the target region comprises:
performing the following processing on each macroblock:
generating a quantization parameter of the macroblock based on the probability that the macroblock comprises the target region, the probability that the macroblock comprises the target region being negatively correlated with the quantization parameter of the macroblock.

21. The method according to any one of claims 18 to 20, wherein the separately setting a quantization parameter for at least one macroblock based on the probability that each macroblock comprises the target region comprises:
performing the following processing on each macroblock:
determining a target flatness level of flatness of the macroblock among a plurality of preset flatness levels;
determining a target probability level, among a plurality of preset probability levels, of the probability that the macroblock comprises the target region; and
querying a quantization parameter table based on the target flatness level and the target probability level to obtain a preset quantization parameter associated with the target flatness level and the target probability level as the quantization parameter of the macroblock, the quantization parameter table comprising mapping relationships between the plurality of flatness levels, the plurality of probability levels, and a plurality of preset quantization parameters, and the preset quantization parameter being negatively correlated with the target flatness level and the probability.

22. The method according to any one of claims 18 to 21, wherein after the separately setting a quantization parameter for at least one macroblock, the method further comprises:
performing the following processing on each macroblock:
determining a variation of the quantization parameter of the macroblock relative to a reference quantization coefficient, the reference quantization coefficient being a quantization coefficient of a macroblock, in an encoded image, that is at the same location as the macroblock; and
determining a product of the variation and an adjustment coefficient, and updating the quantization parameter of the macroblock based on a sum of the product and the reference quantization coefficient, the adjustment coefficient being positively correlated with a quantity of times that a second region continuously appears at a location of the macroblock.

23. An image decoding method, applied to an electronic device, the method comprising:
receiving image encoded data, the image encoded data being obtained through the image encoding method according to any one of claims 1 to 17;
decoding macroblock encoded data based on a quantization parameter of each macroblock to obtain macroblock decoded data of each macroblock; and
combining macroblock decoded data of all macroblocks into a decoded image.

24. The method according to claim 23, wherein after the obtaining a decoded image, the method further comprises:
performing first enhancement on the decoded image to obtain a first enhanced image;
obtaining a target grayscale value of each pixel in the first enhanced image; and
performing second enhancement on the first enhanced image by using the target grayscale value of each pixel to obtain a second enhanced image.

25. The method according to any one of claims 23 to 24, wherein the obtaining a target grayscale value of each pixel in the first enhanced image comprises:
determining a grayscale value of each pixel in the first enhanced image;
for each grayscale value, determining a quantity of pixels with the grayscale value in the first enhanced image, and constructing a raw grayscale histogram based on the quantity;
performing grayscale value conversion based on the raw grayscale histogram to obtain a target grayscale histogram; and
determining the target grayscale value of each pixel in the first enhanced image based on the target grayscale histogram.

26. The method according to any one of claims 23 to 25, wherein the performing second enhancement on the first enhanced image by using the target grayscale value of each pixel to obtain a second enhanced image comprises:
updating the grayscale value of each pixel in the first enhanced image to the target grayscale value corresponding to the pixel, to obtain the second enhanced image; and
the performing first enhancement on the decoded image to obtain a first enhanced image comprises:
performing feature extraction on the decoded image to obtain an image feature; and
performing image reconstruction based on the image feature to obtain the first enhanced image.

27. An image decoding method, applied to an electronic device, the method comprising:
receiving image encoded data, the image encoded data being obtained through the image encoding method according to any one of claims 18 to 22;
decoding macroblock encoded data based on a quantization parameter of each macroblock to obtain macroblock decoded data of each macroblock; and
combining macroblock decoded data of all macroblocks into a decoded image.

28. An image encoding apparatus, comprising:
a data obtaining module, configured to obtain a to-be-encoded image; and
an encoding module, configured to perform at least one image detection mode on the image based on priorities of a plurality of image detection modes to obtain a detection result of the image,
the encoding module being further configured to separately set a quantization parameter for at least one macroblock in the image based on the detection result;
the encoding module being further configured to encode each macroblock based on a quantization parameter of each macroblock; and
the encoding module being further configured to generate image encoded data of the image based on macroblock encoded data obtained through encoding.

29. An image encoding apparatus, comprising:
a data obtaining module, configured to obtain a to-be-encoded image; and
an encoding module, configured to determine, based on proportions of pixels of a plurality of color ranges in the image, a target color range corresponding to a target region of a target object,
the encoding module being further configured to use a proportion of pixels in each macroblock of the image that belong to the target color range as a probability that each macroblock comprises the target region of the target object;
the encoding module being further configured to separately set a quantization parameter for at least one macroblock based on the probability that each macroblock comprises the target region;
the encoding module being further configured to encode each macroblock based on a quantization parameter of each macroblock; and
the encoding module being further configured to generate image encoded data of the image based on macroblock encoded data obtained through encoding.

30. An image decoding apparatus, comprising:
a data obtaining module, configured to receive image encoded data, the image encoded data being obtained through the image encoding method according to any one of claims 1 to 17; and
a decoding module, configured to decode macroblock encoded data based on a quantization parameter of each macroblock to obtain macroblock decoded data of each macroblock,
the decoding module being further configured to combine macroblock decoded data of all macroblocks into a decoded image.

31. An image decoding apparatus, comprising:
a data obtaining module, configured to receive image encoded data, the image encoded data being obtained through the image encoding method according to any one of claims 18 to 22; and
a decoding module, configured to decode each piece of macroblock encoded data based on a quantization parameter of each macroblock to obtain macroblock decoded data of each macroblock,
the decoding module being further configured to combine macroblock decoded data of all macroblocks into a decoded image.

32. An electronic device, comprising:
a memory, configured to store computer-executable instructions or a computer program; and
a processor, configured to: when executing the computer-executable instructions or the computer program stored in the memory, implement the image encoding method according to any one of claims 1 to 17, or implement the image decoding method according to any one of claims 18 to 22.

33. An electronic device, comprising:
a memory, configured to store computer-executable instructions or a computer program; and
a processor, configured to: when executing the computer-executable instructions or the computer program stored in the memory, implement the image decoding method according to any one of claims 23 to 26 or claim 27.

34. A computer-readable storage medium, having computer-executable instructions or a computer program stored therein, the computer-executable instructions or the computer program, when executed by a processor, implementing the image encoding method according to any one of claims 1 to 17 or claims 18 to 22, or implementing the image decoding method according to any one of claims 23 to 26 or claim 27.

35. A computer program product, comprising computer-executable instructions or a computer program, the computer-executable instructions or the computer program, when executed by a processor, implementing the image encoding method according to any one of claims 1 to 17 or claims 18 to 22, or implementing the image decoding method according to any one of claims 23 to 26 or claim 27.

36. A video bitstream storage method, configured for performing the image encoding method according to any one of claims 1 to 17 or claims 18 to 22 to generate a video bitstream; and storing the video bitstream.

37. A video bitstream transmission method, configured for performing the image encoding method according to any one of claims 1 to 17 or claims 18 to 22 to generate a video bitstream; and transmitting the video bitstream.

38. A computer-readable storage medium, having a computer program/instructions and a video bitstream stored therein, the computer program/instructions, when executed by a processor, implementing the operations of the image encoding method according to any one of claims 1 to 17 or claims 18 to 22 to generate the video bitstream.
